(19) Europäisches Patentamt / European Patent Office / Office européen des brevets

(11) **EP 2 270 686 B1**

(12) **EUROPEAN PATENT SPECIFICATION**

(45) Date of publication and mention
of the grant of the patent:
**28.03.2018  Bulletin 2018/13**

(51) Int Cl.:
***G06F 17/30*** *(2006.01)*

(21) Application number: **10006450.0**

(22) Date of filing: **22.06.2010**

(54) **SLA-compliant optimised placement of databases on servers**

Optimierte Plazierung von Datenbanken auf Servern entsprechend einem Service Level Agreement

Optimisation du placement de bases de données sur des serveurs en conformité d'accord de niveau de service (SLA)

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **22.06.2009  CN 200910146215**

(43) Date of publication of application:
**05.01.2011  Bulletin 2011/01**

(73) Proprietor: **SAP SE**
**69190 Walldorf (DE)**

(72) Inventors:
 • **Li, Wen-Syan**
   **69190 Walldorf (DE)**
 • **Jian, Xu**
   **69190 Walldorf (DE)**

(74) Representative: **Raible Deissler Lehmann
Patentanwälte PartG mbB
Senefelderstrasse 26
70176 Stuttgart (DE)**

(56) References cited:
**WO-A1-2008/087162**

 • **YANG, F. ET AL: "A Scalable Data Platform for a
Large Number of Small Applications" CIDR 2009,
FOURTH BIENNIAL CONFERENCE ON
INNOVATIVE DATA SYSTEMS RESEARCH,
ASILOMAR, CA, USA, JANUARY 4-7, 2009,
ONLINE PROCEEDINGS. WWW.CRDRDB.ORG
2009, 4 January 2009 (2009-01-04), - 7 January
2009 (2009-01-07) XP002602699**

 • **PHAN T ET AL: "Heuristics-based scheduling of
composite web service workloads" ACM
INTERNATIONAL CONFERENCE PROCEEDING
SERIES - ACM INTERNATIONAL CONFERENCE
PROCEEDING SERIES - PROC. OF THE 1ST
WORKSHOP ON MIDDLEWARE FOR SERVICE
ORIENTED COMPUTING, MW4SOC 2006, HELD
AT THE ACM/IFIP/USENIX 7TH INT.
MIDDLEWARE CONFERENCE 2006 ASS, vol. 184,
2006, pages 30-35, XP002602700 DOI:
DOI:10.1145/1169091.1169096**

 • **PHAN, T., LI, W.-S.: "A request-routing framework
for SOA-based enterprise computing"
PROCEEDINGS OF THE VLDB ENDOWMENT, vol.
1, no. 1, August 2008 (2008-08), pages 996-1007,
XP002602701 ISSN: 2150-8097**

 • **AULBAEH S ET AL: "Multi-tenant databases for
software as a service: Schema-mapping
techniques" PROCEEDINGS OF THE ACM
SIGMOD INTERNATIONAL CONFERENCE ON
MANAGEMENT OF DATA - SIGMOD 2008:
PROCEEDINGS OF THE ACM SIGMOD
INTERNATIONAL CONFERENCE ON
MANAGEMENT OF DATA 2008 2008
ASSOCIATION FOR COMPUTING MACHINERY
US, 2008, pages 1195-1206, XP002602702 DOI:
DOI:10.1145/1376616.1376736**

 • **PLATTNER, C. ET AL: "DBfarm: a scalable cluster
for multiple databases" LNCS 4290
MIDDLEWARE 2006, 2006, pages 180-200,
XP040468081**

## Description

### Technical Field

This description relates to placement of multi-tenant database applications.

### Background of the Invention

Software as a service (SaaS) generally refers to the provision of functionality of software applications by a provider to a user(s), often remotely over a network. For example, such a provider may maintain hardware, human resources, and other infrastructure needed to implement a software application(s), thereby reducing a total cost and effort required of the user in order to access, and benefit from, the software.

Examples of such scenarios may relate to database applications. For example, a provider may maintain a plurality of servers, associated memory space, and other computational resources, and may provide database applications as a service to a plurality of users using these computational resources. It may often be the case that such a provider may desire to provide such database applications to a plurality of users at the same or overlapping times, and that different ones of the users have different requirements and/or preferences as to how they wish to access and use the database applications. Meanwhile, the providers may face various constraints in providing the database application as a service, and, in particular, may face various constraints related to the computational resources which may be available to apportion among the various users.

As a result, it may be difficult for a provider to provide software as a service in a manner that optimizes the resources of the provider, while still maintaining a desired service experience on the part of the user.

### Summary of the Invention

According to one generally aspect, a computer system including instructions recorded on a computer-readable medium may include a placement manager configured to determine a placement of each of a plurality of tenant databases with one of a plurality of servers, wherein the plurality of tenant databases include original tenant databases and replicated tenant databases that are duplicated from the original tenant databases. The placement manager may include an input handler configured to determine constraints of a service level agreement (SLA) governing an association of the plurality of tenant databases with the plurality of servers, and configured to determine computational constraints associated with the plurality of servers, and may include a chromosome comparator configured to compare a plurality of chromosomes, each chromosome including a potential placement of each of the plurality of tenant databases with one of the plurality of servers, and configured to compare each of the plurality of chromosomes based on compliance with the SLA constraints and relative to the computational constraints, to thereby output a selected subset of the plurality of chromosomes. The placement manager may include a chromosome combiner configured to combine chromosomes of the selected subset of the plurality of chromosomes to obtain a next generation of chromosomes for output to the chromosome comparator and for subsequent comparison therewith of the next generation of chromosomes with respect to the SLA constraints and the computational constraints, as part of an evolutionary loop of the plurality of chromosomes between the chromosome comparator and the chromosome combiner. The placement manager may include a placement selector configured to monitor the evolutionary loop and to select a selected chromosome therefrom for implementation of the placement based thereon.

Implementations may have one or more of the following features. For example, the SLA constraints may specify both a load balancing and a fault tolerance for the plurality of tenant databases for a corresponding tenant with respect to the plurality of servers, provided by installation of at least two of the plurality of tenant databases of the corresponding tenant on at least two of the plurality of servers. The SLA constraints may specify at least two classes of tenants associated with the plurality of tenant databases, the at least two classes including a premium class having superior access to resources of the plurality of servers as compared to a regular class.

In the latter regard, the SLA constraints may specify that the superior access is specified in terms of placement of tenant databases of the premium tenants on servers of the plurality of servers having a relatively lower load as compared to placement of tenant databases of the regular tenants. The SLA constraints also may specify that the superior access in includes a superior fault tolerance that is specified in terms of placement of tenant databases of the premium tenants on more servers of the plurality of servers as compared to placement of tenant databases of the regular tenants on the plurality of servers.

The input handler may be configured to input at least one tenant context associated with tenants associated with the plurality of tenant databases, the at least one tenant context specifying a data size and job request characteristic of the associated tenant databases, and the chromosome comparator may be configured to evaluate the plurality of comparators relative to the SLA constraints and the computations constraints, using the at least one tenant context. The input handler may be configured to input preference parameters received from a preference tuner and expressing a manner in which at least one of the SLA constraints is evaluated by the chromosome comparator.

The placement manager may include a chromosome generator configured to generate an initial population of chromosomes for evaluation by the chromosome comparator, the initial population of chromosomes each being formed as an array of size T having elements numbered from 1 to S, where T is the number of the plurality of tenant databases and S is the number of the plurality of servers. The chromosome combiner may be configured to combine pairs of the plurality of chromosomes including dividing each member of each pair into portions and then combining at least some of the portions from each pair into a new chromosome.

The chromosome comparator may be configured to evaluate each chromosome including creating a plurality of chromosome variants in which each chromosome variant is associated with a potential failure of a corresponding server of the plurality of servers. The chromosome comparator may be configured to evaluate each chromosome including normalizing a load of each server of the plurality of servers and calculating a standard deviation of the loads of the servers. The chromosome comparator may be configured to evaluate each of the plurality of chromosomes for each of a plurality of time periods and then combine the resulting plurality of evaluations to obtain a total evaluation for a corresponding chromosome.

The placement selector may be configured to select the selected chromosome after a pre-determined number of generations of the evolutionary loop, or after determining that the selected chromosome satisfies the SLA constraints to a pre-determined extent.

According to another general aspect, a computer-implemented methodmay include determining each of a plurality of tenant databases and at least one of a plurality of servers, wherein the tenant databases include original tenant databases and replicated tenant databases that are duplicated from the original tenant databases. The method may include determining constraints of a service level agreement (SLA) governing an access of the plurality of tenant databases to the plurality of servers, determining computational constraints associated with the plurality of servers, and evaluating a plurality of chromosomes based on compliance with the SLA constraints and relative to the computational constraints, each chromosome including a potential placement of each of the plurality of tenant databases with one of the plurality of servers. The method may include outputting a selected subset of the plurality of chromosomes, combining chromosomes of the selected subset of the plurality of chromosomes to obtain a next generation of chromosomes for subsequent evaluating of the chromosomes of the next generation of chromosomes with respect to the SLA constraints and the computational constraints, as part of an evolutionary loop of the plurality of chromosomes, and selecting a selected chromosome therefrom for implementation of the placement therewith.

Implementations may have one or more of the following features. For example, the SLA constraints may specify both a load balancing and a fault tolerance for the plurality of tenant databases for a corresponding tenant with respect to the plurality of servers, provided by installation of at least two of the plurality of tenant databases of the corresponding tenant on at least two of the plurality of servers. The SLA constraints may specify at least two classes of tenants associated with the plurality of tenant databases, the at least two classes including a premium class having superior access to resources of the plurality of servers as compared to a regular class. Determining the SLA constraints may include receiving preference parameters expressing a manner in which at least one of the SLA constraints is evaluated by the chromosome comparator.

According to another general aspect, a computer program product may be tangibly embodied on a computer-readable medium and may include instructions that, when executed, are configured to determine a placement of each of a plurality of tenant databases with one of a plurality of servers, wherein the plurality of tenant databases include original tenant databases and replicated tenant databases that are duplicated from the original tenant databases. The instructions, when executed, may be further configured to express potential placements of the plurality of tenant databases on the plurality of servers as chromosomes expressed as arrays of size T having elements numbered from 1 to S, where T is the number of the plurality of tenant databases and S is the number of the plurality of servers, and further configured to determine successive generations of chromosomes, and monitor the successive generations and select a selected chromosome therefrom for implementation of the placement based thereon.

Implementations may have one or more of the following features. For example, the successive generations may be determined by evaluating chromosomes of a current generation relative to constraints of a service level agreement (SLA) governing an association of the plurality of tenant databases with the plurality of servers, and relative to computational constraints associated with the plurality of servers. The successive generations may be determined by determining a selected subset of the current generation based on the evaluating, by combining pairs of the selected subset to obtain a next generation, and then re-executing the evaluating for the next generation to obtain a second selected subset thereof.

The details of one or more implementations are set forth in the accompanying drawings and the description below. Other features will be apparent from the description and drawings, and from the claims.

**Brief Description of the Drawings**

In the drawings,

Figure 1 is a block diagram of a placement system for placing multi-tenant database applications.

Figure 2 is a block diagram illustrating an example combination of chromosomes used in the system of Figure 1.

Figure 3 is a block diagram of example chromosomes incorporating fault tolerance into the system of Figure 1.

Figure 4 is a flowchart illustrating example operations of the system of Figure 1.

Figure 5 is a block diagram of an example chromosome comparator that may be used in the example of Figure 1.

Figure 6 is a first flowchart illustrating example operations of the system of Figures 1 and 5.

Figure 7 is a second flowchart illustrating example operations of the system of Figures 1 and 5.

Figure 8 is a third flowchart illustrating example operations of the system of Figures 1 and 5.

Figure 9 is a fourth flowchart illustrating example operations of the system of Figures 1 and 5.

**Detailed Description**

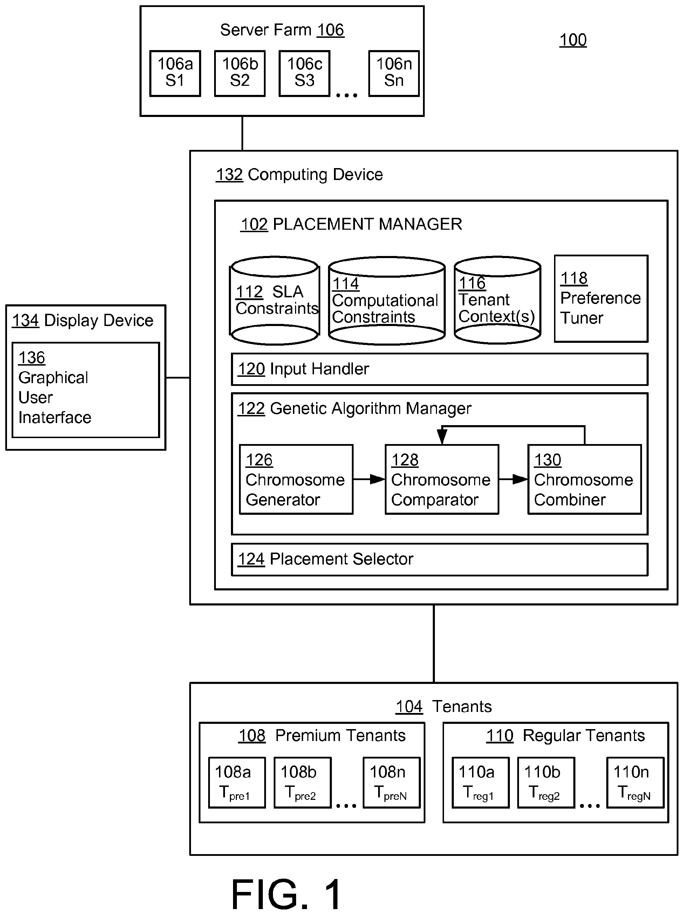

Figure 1 is a block diagram of a placement system 100 for placing multi-tenant database applications. In the system 100, a placement manager 102 is configured to assign placement of a plurality of tenants 104 with respect to a plurality of servers of a server farm 106, in a way that optimizes the computational resources of the servers 106a - 106n, while providing a desired level of individually-customized service to the tenants 104. Moreover, the placement manager 102 may achieve these goals in a fast, efficient, repeatable manner, and for widely-ranging examples of numbers, types, and job requirements of the various tenants.

More specifically, as referenced above, it may be appreciated that the server farm 106 may be provided by a third-party host providing, e.g., a database application(s) to the tenants 104. That is, as is known, to host database applications as a SaaS offering in a cost-efficient manner, providers/hosts who own the server farm 106 may deploy the commonly-used deployment strategy of multi-tenancy, where one instance of the database application is shared by many businesses (i.e., the tenants 104). Such multi-tenancy helps to save not only capital expenditures, such as for hardware, software, and data center, but also operational expenditures, such as for people and power. However, multi-tenancy also may incur a high cost of software deployment due, e.g., to high complexity and requirements needed to customize the deployment of the database application(s) to the tenants 104. As described in more detail below, such requirements for customization of the provision of the database applications for one or more of the tenants 104 are often captured in what is known as a Service Level Agreement (SLA).

Each of the tenants 104 may have such a SLA governing its access to the database applications hosted by the servers 106a-106n. In this regard, it may be appreciated that the tenants 104 may each represent, for example, a business or company using the hosting service(s), where each such tenant will thus typically have multiple users accessing the hosted applications using the same tenant account. These multiple users of a particular tenant account may be referred to as tenant instances.

One aspect of the SLA relates to an identification of each tenant with respect to a tenancy class, where in this context the term class refers to a level or type of service provided to one tenant that may be superior to, or different from, that of another tenant. In the example of Figure 1, and generally herein, examples assume the presence of two classes, referred to as premium tenants 108 and regular tenants 110, although it may be appreciated that a number of classes may be larger than two. In the example of Figure 1, the premium tenants 108 may be provided with a higher level of fault tolerance and/or faster response times (e.g., time needed to respond to a particular database query) than the regular tenants 110. Additional aspects of SLAs governing access of the tenants 104 to the servers 106 are described in more detail, below.

As referenced above, the concept of multi-tenancy, by itself, for hosted database applications, is well known. In this sense, although not illustrated specifically in Figure 1, it is known that such a hosted database application generally has two layers: an application layer running on (e.g., web and application), servers and a database layer running the database system. Multi-tenancy, for purposes of examples in this description, will be assumed to occur at the database layer of a service.

One known approach to implementing multi-tenant database application is known as the database space approach, which is generally suitable for, for example, tenants having relatively large data and computational loads, and/or having high levels of need for data isolation and security. In the database space approach, multiple users are allowed to run on the same database system, while storing their data separately in separate data spaces. This approach has the advantage of user data isolation, and generally requires little or no modification to applications. Overhead may be incurred for system level resources, such as systems tables and other applied processes, since these resources are required per database space.

With the data space approach for multi-tenancy, a database of a tenant may be replicated to multiple servers (e.g., full replication) for enabling both fault tolerance and load balancing. For example, a premium tenant 108a may have data of a certain size and associated with a certain number of jobs per hour related to accessing the data. If the corresponding database is replicated, then the original database may be stored on a first server (e.g., the server 106a), while the replicated database may be stored on a second server (e.g., the server 106b). Then, as requests for access to the database (e.g., database queries) arrive, the requests may be routed to either or both of the tenant (replicated) database(s). When both such databases are available, such a configuration provides a load balancing with respect to the servers 106a/106b, inasmuch as alternate queries may be routed to each server 106a/106b, so that neither server may be required to respond to all queries. Further, in the event that one of the servers 106a/106b fails or is unavailable, then further queries may still be routed to the remaining one of the servers 106a/106b, thus providing a level of fault tolerance in the system 100.

It is known to be a difficult problem to assign, or place, the tenants 104 relative to the servers 106a-106n in an optimal manner. For example, if a tenant database(s) is assigned to a server and only consumes a relatively small portion of the computational resources of that server, then the tenant in question might receive a high level of service, yet the host of the server farm 106 will experience an inefficient and wasteful use of server resources. On the other hand, if a tenant 104 (or a plurality of tenants) is assigned to a server and consumes all or virtually all of the computational resources of that server, then this may make full use of the resources of the host/provider, but may provide a slow or unsatisfactory experience for the tenant(s) in question. Even for a relatively small number of servers and tenants, it may be difficult to place each tenant database with a corresponding server in a way that matches expectations of the tenant while optimizing the resources of the host.

For larger numbers of servers and tenants, the problem of placing tenants with servers expands considerably, since the solution space of assigning T tenants to S servers is of a size $S^T$. This general problem of assigning tenants to servers in the context of a mutli-tenant database application(s) is known, as are a number of possible solutions to this problem. The system 100 of Figure 1 (in particular, the placement manager 102) goes beyond these known solutions to find a suitable placement of the tenants 104 with the servers 106, in a way that is fast and efficient. The system 100 also allows the tenants 104 and servers 106 to comply with an underlying SLA that may include, for example, fault tolerance and load balancing, and that considers possible heterogeneity between (available) computational resources of the servers 106 (e.g., processing resources and storage resources).

In particular, the system 100 may implement a randomized algorithm approach known as a genetic algorithm (GA), which refers generally to a computer simulation of Darwinian natural selection that iterates through successive generations to converge toward the best solution in the problem/solution space. Such a genetic algorithm is used by the system 100 to incorporate SLA requirements into the placement optimization process. Further, the system 100 is capable of proposing "best-available" placements of the tenants 104 to the servers 106, even when there is no known solution that matches all of the SLA requirements completely.

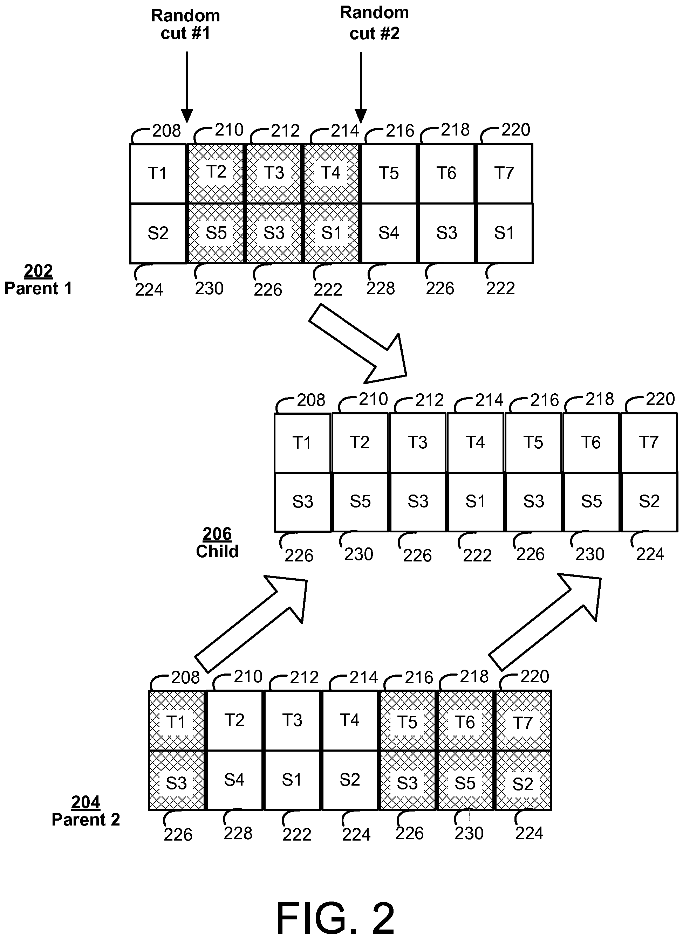

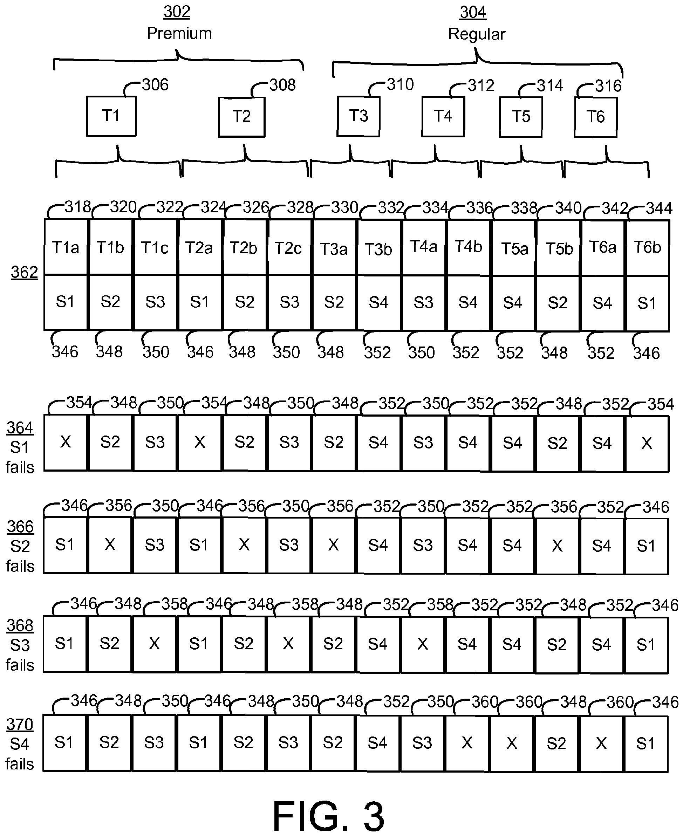

Consequently, in Figure 1, the placement manager 102 may be configured to determine a placement of each of a plurality of tenant databases of the tenants 104 with one of the plurality of servers 106, wherein the plurality of tenant databases include original tenant databases and replicated tenant databases that are duplicated from the original tenant databases (e.g., for purposes of fault tolerance and/or load balancing as referenced herein). In this regard, it may be appreciated that the "tenants 104," as a matter of terminology, may refer to, or be used interchangeably with, corresponding tenant databases. For example, $T_{pre1}$ that is illustrated as the tenant 108a in Figure 1 may refer to a tenant database of the tenant in question, which may be replicated for storage thereof with corresponding server(s) of the servers 106. In this way, example placements of tenants (databases) to servers may be represented and described in an abbreviated and concise fashion, such as is described below with respect to Figures 2 and 3. Of course, it will be appreciated that in practice a given tenant may in fact have more than one database to be replicated/stored.

In the system 100, the above-referenced genetic algorithm approach may be implemented, for example, by creating a "chromosome" representing a possible solution to the problem described above of placing "T" tenants onto "S" servers. Specific examples of such tenant-server chromosomes are provided below and discussed in detail, e.g., with respect to Figures 2 and 3.

Such chromosomes may be created, and ultimately evaluated, using a plurality of inputs. For example, as shown in Figure 1, SLA constraints 112 may exist which may be taken into consideration when creating/evaluating the chromosomes (possible solutions). Specific examples of such SLA constraints are provided below, but, in general, it will be appreciated that such constraints reflect necessary and/or desired characteristics of the database service to be provided to a given tenant. As such, the SLA constraints 112 may include minimum requirements for load balancing and/or fault tolerance, and may define differences in service in these and other regards with respect to premium (as compared to regular) tenants. Some such SLA constraints 112 may be required/necessary, while others may be optional, while still others may be incorporated to varying degrees based on a preference of a user.

Computational constraints 114 refer to inputs related to the computing resources of the servers 106a-106n. For example, each such server may vary to some extent in terms of processing power (e.g., maximum number or size of job requests that may be handled in a given unit of time) or storage capacity. Somewhat similarly, the tenant context(s) 116 may refer to the specific needs or characteristics of each tenant 104. For example, some tenants may have requirements for large databases, yet may access the databases relatively infrequently, while other tenants may conversely have smaller databases which are accessed more frequently, to give but two examples.

It will be appreciated that the SLA constraints 112 may be defined relative to the computational constraints 114 and/or the tenant context(s) 116. For example, the SLA constraints 112 may require that application data of each tenant 104 must fit in one of the servers 106a-106n (e.g., must fit at least the smallest storage capacity of the servers 106a-106n). Consequently, such an SLA constraint may be met by one tenant yet may not be met by another tenant (having a larger application data size).

As referenced above, some of the SLA constraints 112 may be required to be met in order for a placement solution (expressed as a chromosome) to be considered viable, while other SLA constraints 112 may be relaxed or removed. A preference tuner 118 is thus illustrated which may be used to provide such designations between required and optional SLA constraints, and also to provide, for non-required SLA constraints, a degree to which such constraints may be relaxed or removed. In the latter regard, for example, the SLA constraints may specify that premium tenants 108 should be placed with servers having X% less load than servers provided to regular tenants 110 (which implies a faster response time for the premium tenants). The preference tuner 118 may thus be used to require that the X% difference be maintained, or may be used to relax this constraint by requiring only that X% plus/minus Y% be maintained, where the preference tuner 118 allows for adjustment of the Y% value. This and other example uses of the preference tuner 118 are provided in more detail, below.

Thus, in the placement manager 102, an input handler 120 may be configured to determine some or all of the inputs 112-118, including, e.g., the SLA constraints 112 governing the association of the plurality of tenant databases with the plurality of servers, and the computational constraints 114 associated with the plurality of servers 106a-106n. Then, a genetic algorithm manager 122 may be configured to use the received inputs to create a plurality of chromosomes representing possible solutions of placements of the tenants 104 to the servers 106a-106n, where such possible solutions may be evaluated against, e.g., the SLA constraints 112. According to a genetic algorithm, the best of these evaluated chromosomes may be "reproduced" to create a new generation or population of chromosomes, which may then themselves by evaluated so that a subset thereof may be selected for a further reproduction and subsequent evaluation. In this way, each generation/population of chromosomes will tend to converge toward an optimal solution for placing the tenants 104 with the servers 106a-106n. Ultimately, a placement selector 124 may be used to select a particular one of the solutions (chromosomes) for use in executing an actual assignment or placement of the tenants 104 with the servers 106a-106n.

More specifically, the genetic algorithm manager 120 may include a chromosome generator 124 configured to generate tenant-server chromosomes. Such generation may occur at random, or may include some initial guidelines or restrictions with respect to placing or not placing a particular tenant(s) with a particular server(s). As referenced above, examples of such chromosomes are provided below with respect to Figures 2 and 3. But in general, it may be appreciated that the chromosomes are simply potential solutions to the tenant-server placement problem described above, and which may be implemented as data structures including arrays of size T for a total number of tenants (including original and replicated tenant databases), and having element values from 1 to S, where S represents the total number of available servers. For example, a simple example of such a chromosome might be a case of two tenants T1 and T2 and two servers S1 and S2. Then, possible placement solutions (chromosomes) might include [T1/S1, T2/S2], or [T2/S1, T1/S2], or [T1/S1, T2/S1] (i.e., no tenant on S2), or [T1/S2, T2/S2] (i.e., no tenant on S1).

Of course, as described above, larger numbers of tenants and servers cause the available pool of chromosomes to grow exponentially, so that it becomes difficult or impossible to generate, much less evaluate, all possible combinations (chromosomes). This difficulty may be exacerbated by a number of factors. For example, there may be time constraints that may be present when computing a placement solution/assignment, such as when a new tenant or server may become available or unavailable (e.g., server failure). Further, as referenced above, the various inputs 112-118 may be complicating, since, to give but a few examples, SLA constraints 112 may vary in type or extent, servers 106a-106n may be heterogeneous in their computational resources, and the tenant context(s) 116 may vary considerably and may change over time.

Therefore, rather than attempt to generate and evaluate all possible solutions, the chromosome generator 126 generates an initial population or set of chromosomes, which are then evaluated by a chromosome comparator 128, which may be configured to compare the population of chromosomes based on compliance with the SLA constraints 112 and relative to the computational constraints 114 (and also, e.g., the tenant context(s) 116 and/or the user preferences received from the preference tuner 118), to thereby output a selected subset of the plurality of chromosomes, which represent the best available matches/placements of the tenants 104 to the servers 106a-106n. Details and examples of the comparison and evaluation processes of the chromosome comparator 128 are provided below.

Then, a chromosome combiner 130 may receive the selected subset of the plurality of chromosomes and may be configured to combine chromosomes of the selected subset of the plurality of chromosomes to obtain a next generation (population) of chromosomes for output to the chromosome comparator 128, which may then perform another, subsequent comparison therewith of the next generation of chromosomes with respect to the inputs of the input handler 120, including, e.g., the inputs 112-118, as part of an evolutionary loop of successive generations of the plurality of chromosomes between the chromosome comparator 128 and the chromosome combiner 130. With each successive generation, the new population of chromosomes represents or includes a possible improved or optimal placement of tenants 104 with respect to the servers 106a-106n. New generations/populations may thus be iteratively created until either an optimal solution is met (e.g., until all inputs including the SLA constraints are satisfied), or until inputs are met up to some pre-defined satisfactory level, or until time runs out to compute new generations/populations (at which point a best solution of the current generation may be selected).

Thus, given the SLA constraints 112 as described above, it may be appreciated that the system 100 is capable of finding the optimal assignments of the tenants 104 to the servers 106a-106n such that required SLA constraints are met absolutely, while optional SLA constraints are met following user-provided prioritization, and such that a maximum completion time across all the tenants' jobs is minimized. In the latter regard, such a maximum completion time across all jobs may be referred to as the makespan. The system 100 may thus be configured to minimize the makespan during a given measurement period. Such a measurement period may be hourly, daily, or weekly, to give a few examples. In the examples provided herein, it is assumed that the tenants 104 represent businesses which experience significant and somewhat predictable variations in usage over a typical 24 hour day. Thus, in the following examples, the time unit of one hour is used, so that load distribution across the servers 106a-106n may be balanced across a 24-hour time series, using hourly average loads.

As described above, the known load-balancing problem of assigning T tenants to S servers may be defined with respect to a minimization of the makespan as a way to judge a success of the placement. However, such a result may not be satisfactory in many situations. For example, a solution that minimizes only the makespan may produce an assignment where the premium tenants 108 face response times that may not meet their differential SLA requirements relative to the regular tenants 110. In contrast, the system 100 is capable of incorporating significantly more factors into the placement process than just the makespan as a way to judge the resulting placements, and may do so in a flexible and fast manner that provides a best-available solution when the actual best solution is not attainable..

As referenced above, the placement selector 124 may be configured to monitor the evolutionary loop and to select a selected chromosome therefrom for implementation of the placement based thereon. As just referenced, the selected chromosome/solution may represent either the best (optimal) solution, or may represent a best-available solution. Thus, the placement selector 124 may be tasked with determining whether, when, and how to interrupt or otherwise end the evolutionary loop and extract the best or best-available solution. Then, the placement selector 124 may output the selected chromosome and/or execute the actual transmission and/or installation of the tenant data on the appropriate server(s).

In Figure 1, it may be appreciated that the system 100 is illustrated using various functional blocks or modules representing more-or-less discrete functionality. Such illustration is provided for clarity and convenience, but it may be appreciated that the various functionalities may overlap or be combined within a described module(s), and/or may be implemented by one or more module(s) not specifically illustrated in Figure 1. Of course, conventional functionality that may be useful to the system 100 of Figure 1 may be included as well, such as, for example, functionality to replicate tenant databases as needed. Again, such conventional elements are not illustrated explicitly, for the sake of clarity and convenience.

The system 100 may thus transform a state(s) of the server(s) 106a-106n between being empty and being filled to various degrees with one or more tenant databases. At the same time, the system 100 may transform the tenant databases from a first state of being stored at a first server (either one of the servers 106a-106n or another offsite server, e.g., of the tenant in question) to a second state of being stored at a (different) server of the servers 106a-106n. As referenced above, the tenant databases may store virtually any type of data, such as, for example, in the business arena, where data may include physical things including customers, employees, or merchandise for sale.

As shown, the system 100 may be associated with a computing device 132, thereby transforming the computing device 132 into a special purpose machine designed to determine and implement the placement process(es) as described herein. In this sense, it may be appreciated that the computing device 132 may include any standard element(s), including processor(s), memory, power, peripherals, and other computing elements not specifically shown in Figure 1. The system 100 also may be associated with a display device 134 (e.g., a monitor or other display) that may be used to provide a graphical user interface (GUI) 136. The GUI 136 may be used, for example, to receive preferences using the preference tuner 118, to input or modify the SLA constraints 112, or to otherwise manage or utilize the system 100. Other elements of the system 100 that would be useful to implement the system 100 may be added or included, as would be apparent to one of ordinary skill in the art.

Figure 2 is a block diagram illustrating an example combination of chromosomes 202, 204 used in the system of Figure 1. That is, chromosomes 202, 204 may be a pair of a plurality or population of chromosomes determined by the chromosome comparator 128 which are output to the chromosome combiner 130, as described herein. Such pairs of chromosomes may be input to the chromosome combiner 130 and then combined in the role of parent chromosomes to execute a simulation of sexual crossover to obtain a new child chromosome 206, which, as described above, is thus part of a new generation of chromosomes which may be input back into the chromosome comparator 128 with other members of the same generation as part of an evolutionary loop to optimize the placement of tenants 104 to servers 106a-106n. Thus, the genetic algorithm manager 122 provides a genetic algorithm as a computer simulation of Darwinian natural selection that iterates through various generations to converge toward the best solution in the problem space.

In the example of Figure 2, the chromosomes 202-206 each are represented as part of an array of size T=7 (with tenant databases T1-T7 being labeled 208-220), having elements with values between 1 and S=5 (with servers S1-S5 being labeled 222-230). It may be assumed that Figure 2 is a simplified example having only one class of tenant, and in which tenant databases are not replicated for fault tolerance. Thus, Figure 2 merely illustrates the concept that one or more tenant databases 208-220 may be placed with a server of the servers 222-230, although not every server need be used for a particular solution (for example, the child chromosome 206 does not use the server S4 228).

FIG 2 further illustrates the concept of genetic recombination as executed in the genetic algorithm manager 122. In Figure 2, Figure 2 shows a recombination of chromosomes applied to the two parents 202, 204 by the chromosome combiner 130 to produce the new child chromosome 206, using a two-point crossover scheme. Using this approach, a randomly chosen contiguous subsection of the first parent 202 (defined by random cuts 1 and 2) is copied to the child 206, and then all remaining items in the second parent 204 are added that have not already been taken from the first parent's subsection. In Figure 2, the portions of the parent chromosomes 202, 204 defined by the random cuts 1 and 2 are illustrated as hashed and indicated by corresponding arrows as being combined within the child chromosome 206, maintaining the order of appearance as in the parents.

Such a combination is but one example of possible recombination techniques. In general, it may be appreciated from known characteristics of genetic algorithms that parent chromosomes may recombine to produce children chromosome, simulating sexual crossover, and occasionally a mutation may be caused to arise within the child chromosome(s) which will produce new characteristics that were not available in either parent. Such mutations may be generated at random, or according to a pre-defined technique, by the chromosome combiner 130.

The children chromosomes may then be passed back to the chromosome comparator 126, which, as described, may be configured to evaluate and then rank the children chromosome, and thereafter to select the best subset of the children chromosomes to be the parent chromosomes of the next generation, thereby, again, simulating natural selection. The generational or evolutionary loop may end, e.g., after some optimal condition is met, or after some stopping condition is met. As an example of the latter, the placement selector 124 may be configured to monitor the genetic algorithm manager 122 and to end the evolutionary loop after 100 generations have passed, or until the genetic algorithm manager 122 fails to produce a better solution after a pre-set number of generations.

To compare and evaluate the chromosomes, the chromosome comparator may implement an evaluation function which incorporates or reflects, e.g., the various inputs 112-118. The evaluation function may be applied for every hour over a 24 hour period to obtain a total score, which may then be used to select the best subset of children chromosomes to be the parent chromosomes of the next generation. Specific examples of the evaluation function are provided in more detail, below.

Figure 3 is a block diagram of example chromosomes incorporating fault tolerance into the system of Figure 1. More specifically, Figure 3 illustrates different service provided according to a 2-class scheme including both premium tenants 302 and regular tenants 304, and incorporating fault tolerance as described herein.

To provide fault tolerance in this example, two full replica databases are created for each premium tenant 302 (including premium tenants 306, 308) and one full replica database is created for each regular tenant 304 (including regular tenants 310, 312, 314, 316). Thus, as shown, the premium tenant 306 is associated with original and replicated tenant databases 318, 320, 322, and the premium tenant 308 is associated with original and replicated tenant databases 324, 326, 328. Similarly, the regular tenant 310 is associated with original and replicated tenant databases 330, 332, the regular tenant 312 is associated with original and replicated tenant databases 334, 336, the regular tenant 314 is associated with original and replicated tenant databases 338, 340, and the regular tenant 316 is associated with original and replicated tenant databases 342, 344.

The original and replicated tenant database 318-344 may thus be assigned/placed to four servers S1-S4, shown in Figure 3 as 346, 348, 350, 352. In a first example in which none of the servers have failed, the tenant databases are assigned among the four servers 346-352 as shown, with tenant databases 318-344 being respectively distributed to servers 346, 348, 350, 346, 348, 350, 348, 352, 350, 352, 352, 348, 352, and 346. For example, tenant databases 336 and 338 associated with regular tenants 312, 314 respectively are both assigned to server S4 352. In another example, original and replicated tenant databases 318-322 associated with the premium tenant 306 are assigned to servers 346, 348, 350 respectively. Thus, load balancing may be achieved by distributing the original and replicated tenant databases among the different servers 346-352.

Further, fault tolerance may be provided since if one of the servers 346-352 fails, at least one other copy of every tenant database on the failed server will exist within the larger system. For example, as just referenced, original and replicated tenant databases 318-322 associated with the premium tenant 306 are assigned to servers 346, 348, 350 respectively. Consequently, if the server S1 354 fails so that the tenant database 318 is unavailable (as shown in Figure 3 by block 354), then remaining tenant databases 320 and 322 are still available. Similarly, tenant databases 324 and 344 would also be unavailable, while copies of these tenant databases would continue to be available on corresponding non-failed servers. Figure 3 illustrates further examples in which the server S2 348 fails (as shown by blocks 356), in which the server S3 350 fails (as shown by blocks 358), and in which the server S4 352 fails (as shown by blocks 360).

Thus, Figure 3 shows an example in which two premium tenants 306, 308 are each replicated twice, while four regular tenants 310-316 are each replicated once, so that there are a total of (two) (three) + (four) (two) or fourteen total original and replicated tenant databases to be distributed among the four available servers. The result, as shown, is a chromosome 362 of array size 14 having values defined with respect to S1-S4 (346-352), as already referenced above with respect to Figure 2.

In Figure 3, it may be appreciated that expressing fault tolerance is as simple as creating a new chromosome 364, 366, 368, 370 for each possible server failure, as shown. Then, the resulting chromosomes 364-370 may be evaluated using the system 100 of Figure 1 in the same manner as the standard chromosome 362. It should be apparent that it is possible to express multiple simultaneous server failures in the same fashion, although Figure 3 is restricted to the example of a single server failure for the sake of simplicity and conciseness.

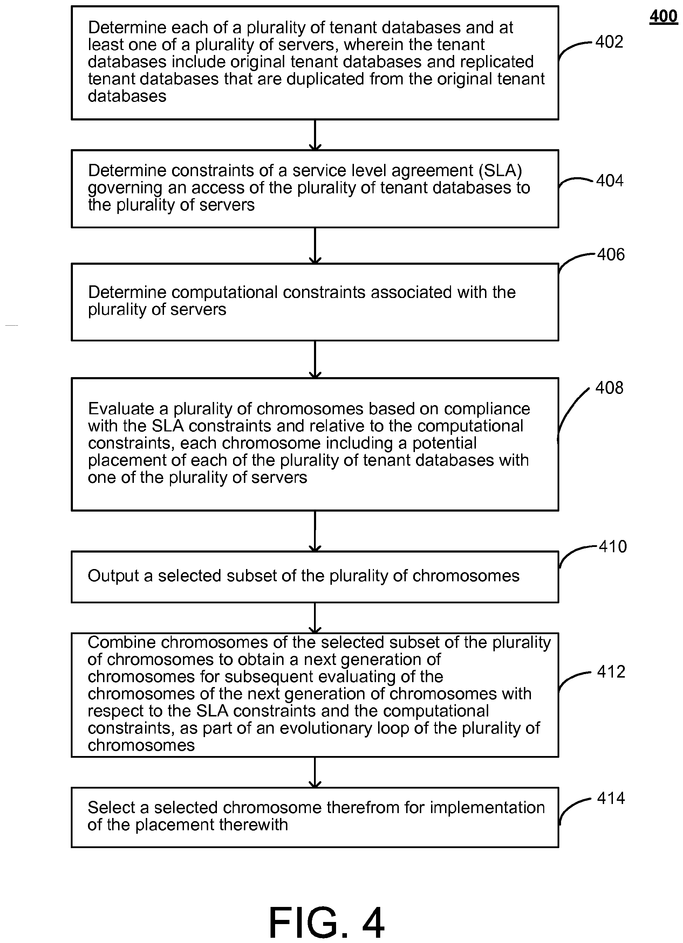

Figure 4 is a flowchart 400 illustrating example operations of the system of Figure 1. Specifically, as referenced above with respect to Figures 1-3, the system 100 of Figure 1 may be configured to represent potential placements of tenant databases (i.e., original and replicated tenant databases, for purposes of load balancing and fault tolerance) to available servers as chromosomes of a genetic algorithm. Various inputs 112-118 of Figure 1 are available for use in generating and evaluating the chromosomes. Selected chromosomes of a first generation of chromosomes may then be combined to form a second generation of chromosomes, whereupon the process of evaluating the chromosomes based on the inputs 112-118 may be repeated so that a subset of the second generation may be selected for use in reproducing a third generation of chromosomes. Subsequent iterations or repetitions of such evolutionary loops allow for a process of natural selection to take place in which members of the generations converge toward optimal placement solutions. As shown in examples herein, some or all of the various inputs 112-118 may be implicitly and straight-forwardly incorporated into such a genetic algorithm, such that the resulting optimized solutions are guaranteed to satisfy SLA constraints 112 and other inputs to a desired degree (i.e., wholly or partially).

In Figure 4, then, each of a plurality of tenant databases and at least one of a plurality of servers may be determined (402). The tenant databases include original tenant databases and replicated tenant databases that are duplicated from the original tenant databases, as described. For example, such tenant databases may include or be related to the tenants 104, including premium tenants 108 and regular tenants 110. Examples of replication of such tenant databases are provided and discussed above with respect to Figure 3, such as when the tenant database 306 is represented by original/replicated tenant databases 318, 320, 322. The servers may include servers 106a-106n of the server farm 106.

Constraints of a service level agreement (SLA) governing an access of the plurality of tenant databases to the plurality of servers may be determined (404). For example, the input handler 120 may determine the SLA constraints 112. As described, the SLA constraints 112 may include constraints that are required and must be met, and/or may include SLA constraints that are relaxed and/or optional. The SLA constraints 112 may specify, e.g., parameters for load balancing among the servers 106a-106n, or for load balancing among the tenants 104 including differential service levels for premium tenants 108 as opposed to regular tenants 110. The SLA constraints 112 also may specify required levels of fault tolerance for the premium and/or regular tenants 108/110, as well as other characteristics of the differential service provided to premium as opposed to regular tenants. Other examples of SLA constraints are described herein.

Computational constraints associated with the plurality of servers may be determined (406). For example, the input handler 120 may determine the computational constraints 114, which may relate to the capabilities of the servers 106a-106n. For example, the servers 106a-106n may have heterogeneous computing capabilities (e.g., differing processing speeds or storage capacities). Such computational constraints 114 may be relevant to evaluating the SLA constraints 112. For example, if an SLA constraint specifies that every tenant database must fit completely onto its assigned server, then if the computational constraints 114 specify that a given server has too little memory capacity to contain the entire tenant database, then that server may be eliminated as a placement candidate for the tenant database in question.

In this regard, it may be appreciated that the input handler 120 also may input the tenant context(s) 116 which may specify such things as the size(s) of a database of a given tenant, or how often the tenant outputs job requests for data from the tenant database. Meanwhile, the preference tuner 118 allows users of the system 100 to specify a manner in which, or an extent to which, the SLA constraints 112 are matched according to the computational constraints 114 and the tenant context(s) 116. For example, the preference tuner 118 may allow a user to specify a degree to which relaxed SLA constraints 112 are, in fact, relaxed. For example, although the SLA constraints 112 may specify completely equal load balancing between three servers for a given tenant/tenant database. However, the preference tuner 118 may specify that actual load balancing that is within a certain percent difference of complete equality may be acceptable, where the preference tuner 118 may be used to raise or lower the acceptable percent difference. Other examples of tunable preferences relative to the inputs 112-116 are provided herein.

A plurality of chromosomes may then be evaluated based on compliance with the SLA constraints and relative to the computational constraints, where each chromosome may include a potential placement of each of the plurality of tenant databases with one of the plurality of servers (408). For example, the chromosome generator 126 of the genetic algorithm manager 122 may be used to randomly generate chromosomes placing the tenants 104 (including original and replicated tenant databases) to the servers 106a-106n, as shown in Figure 2 with respect to chromosomes 202, 204. As further shown in Figure 3 with respect to chromosomes 362-370, levels of fault tolerance may be represented and incorporated simply by creating chromosomes in which a specific server is removed to represent its (potential) failure.

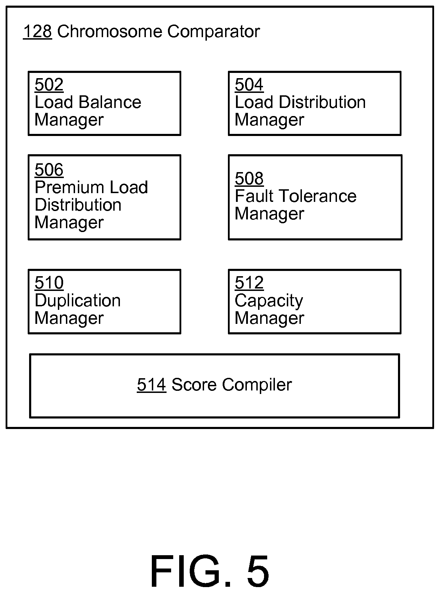

Evaluation may proceed based on one or more evaluation functions. Specific examples of such evaluation function(s) are provided below with respect to Figures 5-9. As referenced above, evaluation may proceed based on any or all of the inputs 112-118. The result of performing the evaluation(s) may include assignment of a score to each chromosome of the generated plurality of chromosomes.

A selected subset of the plurality of chromosomes may then be output (410). For example, the chromosome comparator 128 may execute the evaluation then output the selected subset of the chromosomes to the chromosome combiner 130.

Chromosomes of the selected subset of the plurality of chromosomes may be combined to obtain a next generation of chromosomes for subsequent evaluating of the chromosomes of the next generation of chromosomes with respect to the SLA constraints and the computational constraints, as part of an evolutionary loop of the plurality of chromosomes (412). For example, the chromosome combiner 130 may execute such a combination of the selected subset of chromosomes, such as by the example(s) discussed above with respect to Figure 2, or using other (re-)combination techniques known in the art of genetic algorithms. Then, the chromosome comparator 128 may simply re-execute the evaluation function referenced above with respect to this new generation of chromosomes, to thereby re-output a selected subset thereof back to the chromosome combiner 130.

A selected chromosome may be selected therefrom for implementation of the placement therewith (414). For example, the placement selector 124 may be configured to select a particular chromosome from the chromosome comparator 128 or chromosome combiner 130, based on some pre-set criteria. For example, the placement selector 130 may select a chromosome either after the SLA constraints 112 are sufficiently met, or after a certain number of evolutionary loops have been executed. Advantageously, the placement selector 130 may select a solution (chromosome) at almost any time during the genetic algorithm, which would then represent a best available solution, and does not need to wait until if and when the algorithm completes.

Figure 5 is a block diagram of an example chromosome comparator 128 that may be used in the example of Figure 1. More specifically, Figure 5 illustrates an example of the chromosome comparator 128 configured to evaluate/score/compare the chromosomes by executing a particular evaluation function relative to specific SLA constraints 112. In this regard, it will be appreciated that such specific examples are merely for the sake of illustrating various embodiments to assist in understanding more general related concepts, and are nonlimiting with respect to other embodiments that would be apparent to those of skill in the art.

For the sake of the following examples, it is assumed as described above with respect to FIGS 1-3 multi-tenant database applications are used in the server farm 106, and that each premium tenant is replicated across three servers, and requests are routed to these servers in a round robin fashion. Similarly, each regular tenant has its data replicated across two servers. Thus, the premium and regular tenants can survive up to two and one server failures, respectively.

In the example(s) of Figures 5-9, the following six SLA constraints are assumed to be implemented (e.g., required or specified to a specified extent), as described in detail below. In particular, a first constraint may specify that loads are balanced across servers after calibration to normalize heterogeneous computational power. A load balance manager 502 may be included to manage this constraint.

A second constraint may specify that loads are balanced across all tenants of the same class (and all tenant instances of the same tenant) even when a server failure occurs (fault tolerance). A load distribution manager 504 may be included to enforce this constraint.

A third constraint may specify that premium tenants are provided with servers with X percent less load than those provided to regular clients. In this regard, it may be appreciated that assigning more servers to premium tenants does not necessarily ensure better response time, since, e.g., response times also may depend on load levels of the premium tenants, the numbers of regular tenants assigned to the same servers, and the regular tenants' loads. A premium load distribution manager 506 may be included to enforce this constraint.

When referring to load(s) in these examples, daily load distribution is considered based on the recognition that a tenant's load may vary greatly in a day. For example, a tenant may have a heavier load during its business hours, and business hours themselves may vary for different tenants, different industries, and different geographical regions. Consequently, a temporal locality of traffic patterns may be considered, and a load distribution may be treated as a time series of hourly average loads for higher accuracy of load balancing.

With regard to these first three constraints, it may be observed that the constraints may be implemented to varying desired degrees, and do not represent absolute or all-or-nothing requirements to be imposed on the resulting placement(s). For example, system administrators may configure the importance of load balance during normal operation, as opposed to when a system failure occurs. In another example, loads need not be balanced exactly evenly, as referenced above, but may be balanced evenly within a certain window or margin of error and still be acceptable. The extent to which such parameters may be implemented or adjusted may be specified by the preference tuner 118.

A fourth SLA constraint may specify that data for both premium and regular tenant databases should be replicated, where the degree of fault-tolerance via replication may vary by tenant class differentiation. Generally, the level of fault tolerance may be the same for all tenants in the same tenant class, with the premium tenants are provided with a higher level of fault tolerance via replication across more servers than the regular tenant class, with the examples herein assuming two replications for premium tenants and one replication for regular tenants. A fault tolerance manager 508 may be included to enforce this constraint.

A fifth SLA constraint may specify that replicas of the same tenant database should not be placed on the same server, since such an assignment would provide no merit. A duplication manager 510 may be included to enforce this fifth constraint.

A sixth SLA constraint may recognize that each server has a storage capacity limit (as specified by the computational constraints 114), and each tenant has application data of a "fixed" size (for a period of time) (as specified by the tenant context(s) 116). The application data of a tenant database must fit in one server. It is assumed for the sake of simplicity that the system 100 does not move replicas of tenant data around to adjust for load level changes in different hours of the day. A capacity manager 512 may be included to enforce this sixth constraint.

The fourth, fifth, and sixth SLA constraints referenced above may be considered to be absolute constraints, i.e., constraints which must be met in order for a particular placement (chromosome) to be considered viable. In other words, chromosomes which do not meet these particular constraints may be immediately discarded.

Finally in Figure 5, a score compiler 514 may be used as needed to track ongoing score parameters as they are calculated, and then to aggregate or otherwise compile one or more scores associated with the evaluation function(s) of the chromosome comparator (128).

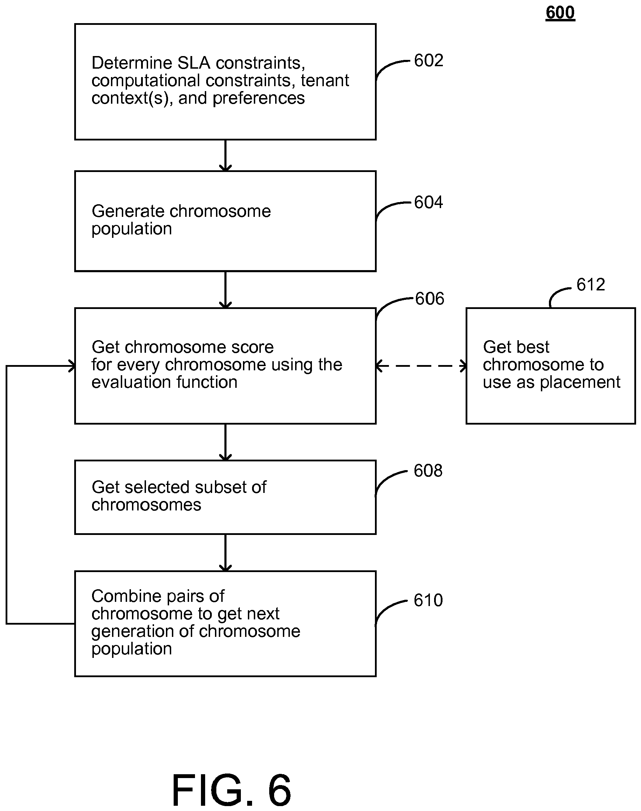

Figure 6 is a first flowchart 600 illustrating example operations of the system of Figures 1 and 5. In the example of Figure 6, the input handler 120 may determine some or all of the SLA constraints 112 as represented by the six SLA constraints just described, computational constraints 114 related to processing and storage limits of the servers 106a-106n, tenant context(s) 116 related to workload requirements and database sizes of the various tenants 104, and preferences related to some or all of the above as received through preference tuner 118 (602).

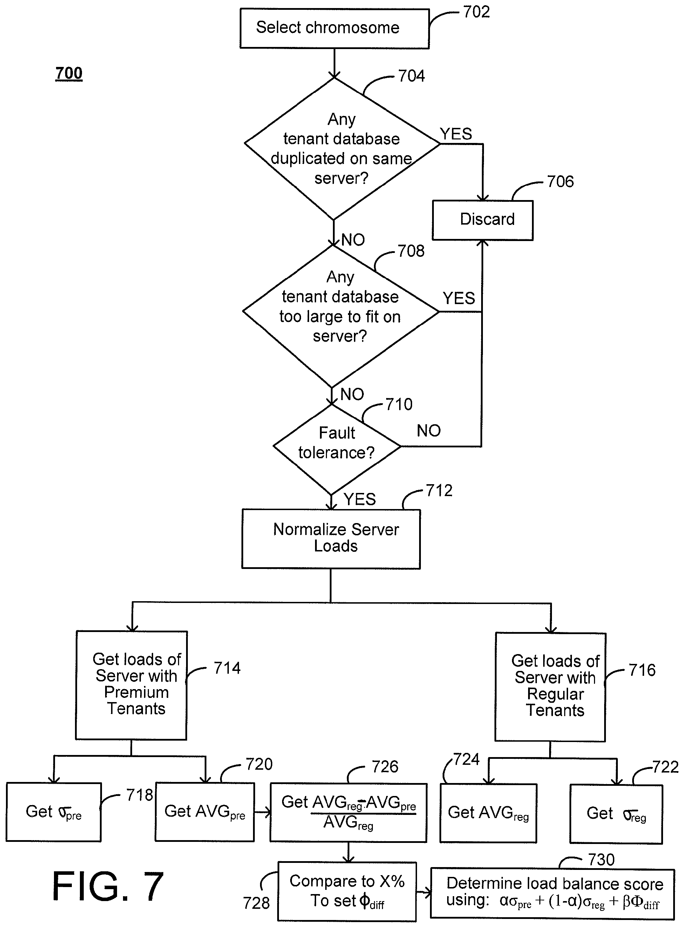

Then, the chromosome generator 124 may generate a first or initial chromosome population (604). For example, the chromosome generator 124 may generate a pre-determined number of chromosomes simply by randomly assigning tenants to servers. Then, the chromosome comparator 126 may execute an evaluation function for each chromosome to associate a score with each chromosome (606). The evaluation function may be executed using components 502-514, and specific examples of the evaluation function are provided below with respect to Figures 7-9.

Based on the evaluation and scoring, a selected subset of the chromosomes may be obtained (608) by the chromosome comparator 126. Then, this selected subset may be passed to the chromosome combiner 128, which may then combine pairs of the chromosomes to obtain a next generation of chromosomes (610). Figure 2 provides an example of how such combinations may be executed, although other techniques may be used, as would be apparent.

An iterative, evolutionary loop may thus progress by returning the next generation of chromosomes back to the chromosome comparator 126, as illustrated in Figures 1 and 6. Each generation will, on the whole, generally advance toward an acceptable or optimized solution. The loop may be ended after a pre-determined number of iterations/generations, or when the SLA constraints are all satisfied to a required extent, or after a time limit or some other stop indicator is reached. Such determinations may be made by the placement selector 130, which may then select the best available chromosome to use as the placement solution (612).

Figure 7 is a second flowchart 700 illustrating example operations of the system of Figures 1 and 5. Specifically, Figure 7 illustrates execution of some aspects of the evaluation function used by the chromosome comparator 128 of Figures 1 and 5.

In Figure 7, a chromosome from a population of chromosomes is selected (702). The chromosome comparator 128 may first check for SLA constraints which are required and which may be easily verified. For example, the fifth SLA constraint may be checked by the duplication manager 510 to ensure that no tenant database is duplicated (replicated) on the same server (704), since, as referenced, such a placement would serve no purpose from a fault tolerance standpoint. Thus, if such duplication occurs, the chromosome in question may be discarded (706).

Otherwise, the capacity manager 512 may verify the sixth SLA constraint requiring that tenant database(s) must fit, each in their entirety, on at least one server onto which it might be placed (708). If any tenant database is too large n this sense, then again the relevant chromosome may be discarded (706).

The fault tolerance manager 508 may check the chromosome to ensure that the chromosome includes three total tenant databases (one original and two replicas) for each premium tenant, and two total tenant databases (one original and one replica) for each regular tenant. If not, then the chromosome may be discarded (706). In this way, the required difference in level of fault tolerance may be maintained.

Then, the load balance manager 502 and the load distribution managers may execute their respective functions to enforce the first and second SLA constraints, above, while the premium load distribution manager 506 may be used to monitor and/or enforce the third SLA constraint.

These and following calculations may be made using the following notations and conventions. Specifically, each server $s_i$ is said to have computational power $CompPowers_i$ measured by the number of jobs handled per hour. Each server also has a storage capacity of $StorageCaps_i$. $T = \{t_1, t_2, ... , t_n\}$ represents the set of post-replication tenants where each tenant $t_j$ has a load of $Loadt_j$ jobs per hour and a data volume of $DataVolumet_j$. $T_{pre}$ is the set of premium tenants and Treg is the set of regular tenants such that ($T_{pre}$ U $T_{reg}$ = T and Tpre n Treg = null).

The servers 106a-106n may be heterogeneous in terms of their computational power/constraints. Each server may thus have a normalized load with respect to its computational power, where such a normalized load of a server S may be represented as $L_s$. Servers with (replicas of) premium tenants may be defined as a set $S_{pre} = \{s_{p1}, s_{p2}, ... s_{pi}\}$, While Sreg = $\{s_{r1}, s_{r2}, ... s_{rj}\}$ represents servers with (replicas of) regular tenants. As may be appreciated, $S_{pre}$ and Sreg may have overlap. Using the above notation, the load balance manager 502 and/or load distribution manager 504 may mandate and/or execute operations regarding obtaining the loads of servers with premium tenants (714) and regular tenants (716).

Then, $\sigma_{pre}$ may be the standard deviation of $\{L_{sp1}, L_{sp2} ... L_{spi}\}$, and $\sigma_{reg}$ may be the standard deviation of $\{L_{sr1}, L_{sr2}, ... , L_{srj}\}$. Generally, then, a smaller $\sigma_{pre}$ indicates a more consistent load distribution over all the servers that contain premium tenants, and thus a more smooth experience of the premium tenants. The same reasoning also applies to $\sigma_{reg}$ for regular tenants, although a larger value of $\sigma_{reg}$ may be tolerated for servers with regular tenants and no premium tenants. In general, it may be appreciated that preferred placements should minimize both $\sigma_{pre}$ and $\sigma_{reg}$ to the extent possible, to provide better user experience. Thus, the load balance manager 502 may calculate the parameters $\sigma_{pre}$ (720) and $\sigma_{reg}$ (722).

It is described above that the third constraint may specify that premium tenants are provided with servers with X percent less load than those provided to regular tenants. This constraint reflects the business value of providing premium tenants with better service that is associated with light loaded servers. For example, if it is desired that premium tenants be provided with servers that have X% less load than the ones provided to regular tenants, and a placement results in an average load $AVG_{pre}$ for premium tenants and an average load $AVG_{reg}$ for regular tenants, the closer the differential ($AVG_{reg}$ - $AVG_{pre}$)/ $AVG_{reg}$ is to X%, the closer the third SLA constraint is to being satisfied. Thus, as shown in Figure 7, the load distribution manager 504 may be configured to calculate AVGpre (720), and $AVG_{reg}$ (724). Then, the premium load distribution manager 506 may be configured to determine a percent difference between these parameters (726) as described above. This percent difference may then be compared to the parameter X% to determine a parameter $\Phi_{diff}$ (728) to use in judging the degree to which the third SLA constraint is realized for the chromosome in question.

In general, then, the chromosome being scored in Figure 7 may have an initial score as shown in Eq. 1:

$$\sigma_{pre} \ + \ \sigma_{reg} \ + \ \Phi_{diff} \ ,$$

**Eq. 1**

where a smaller score is preferred as representing smaller standard deviations and a smaller percent difference relative to the X% constraint of the third SLA constraint. Beyond this, however, and as described above, e.g., with respect to Figure 6, preference parameters may be received through the preference tuner 118 which define an extent or manner in which the above score components are valued.

Specifically, $\alpha$ may represent a weight that can be configured by users to indicate their preference of making the load of the servers occupied by premium tenants or occupied by regular tenants more balanced. Meanwhile, $\beta$ may

represent a parameter to tune how desirable it is to achieve the differential load requirement $\Phi_{diff}$. Then, the chromosome score may be represented more fully as shown in Eq. 2, which may be determined by the score compiler 514 (730):

$$\alpha\sigma_{pre} + (1- \alpha)\sigma_{reg} + \beta\Phi_{diff}.$$

## Eq. 2

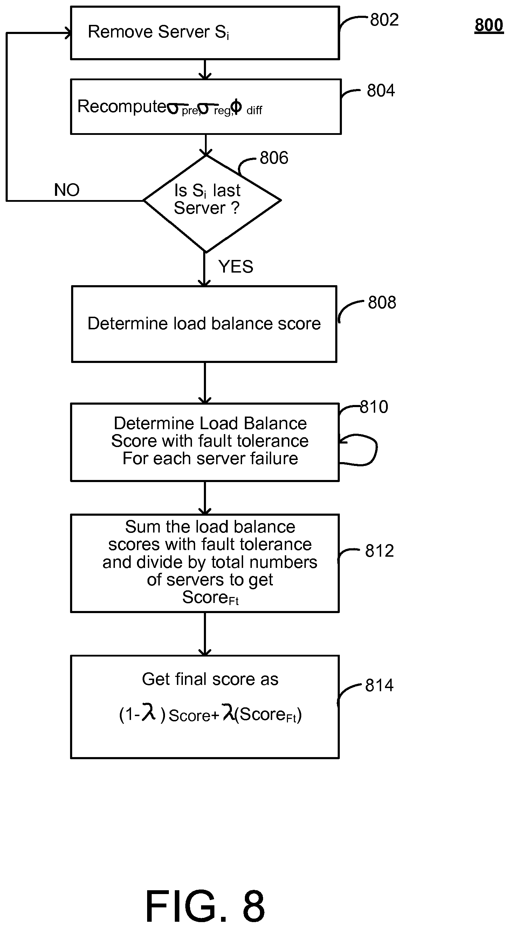

Figure 8 is a third flowchart 800 illustrating example operations of the system of Figures 1 and 5. Specifically, Figure 8 illustrates specific techniques for providing fault tolerance including load balancing in the presence of a server failure, such as described above with respect to Figure 3, and such as may be executed by the fault tolerance manager 508 together with the load balance manager 502 and/or the load distribution manager 504 of Figure 5.

As appreciated from the above description, the database space approach to multi-tenant database applications as described herein may use content-aware routers or other known techniques to distribute requests of the same tenant to multiple servers (each server containing an original or replicated version of the database of that tenant). When a server failure occurs, such as described above with respect to Figure 3, the routers have to redirect the requests to the failed server to other, functional servers. In order to ensure load balance even when a server failure occurs, a placement during a normal operation period should be evaluated as well. Thus, for a given chromosome being scored (such as the chromosome 362 of Figure 3), multiple chromosome variants (such as chromosome variants 364-370) may be determined, in each of which a different one of the servers is assumed to have failed. Then, the chromosomes and chromosome variants may be scored according to the evaluation function described above with respect to Figures 6 and 7. Further, as described below, user preferences may be received and included with respect to an extent to which such fault tolerant load-balancing is required in a given implementation of the larger evaluation function.

In Figure 8, then, for a chromosome being scored, a server $S_i$ is removed from the chromosome to create a first chromosome variant (802) in which the server $S_i$ fails and all future requests to the server must be re-routed to other servers. Then, the parameters above of $\sigma_{pre}$, $\sigma_{reg}$, and $\Phi_{diff}$ are re-calculated for the chromosome variant (804). If $S_i$ is not the last server in the chromosome, then the process continues with removing the next server (802).

Otherwise, the load balance score for the chromosome may be obtained (808). That is, the score as determined in Figure 7 (730) may be calculated or retrieved from memory. Then, the same techniques as described above for Figure 7 may be re-executed to obtain a load balance score for each chromosome variant and associated server failure (810).

The result is that the normal load balance score (with no server failures) is obtained (such as for the chromosome 362 of Figure 3), along with a number of scores in which each score corresponds to a chromosome variant (e.g., chromosome variants 364-370 of Figure 3), using Eq. 1 and/or Eq. 2 above. The scores of the chromosome variants may be averaged by the number of chromosome variants to obtain a fault tolerance score $Score_{Ft}$ (814).

It may be appreciated that server failures at the server farm 106 may be considered to be relatively likely or unlikely, or that a given tenant or other user may have a relatively higher or lower risk tolerance for sustaining a server failure. Due to these and other related or similar reasons, a fault tolerance score and associated analysis may be relatively more or relatively less important to a particular tenant. Therefore, the preference tuner 118 may provide a user to input a preference according to which the fault tolerance score is weighted, where this preference is represented in this description as $\lambda$. In using this weighting factor $\lambda$, it may thus be appreciated that a smaller value for $\lambda$ indicates that a high score of a placement in normal cases (i.e. cases in which no server crashes) is preferred. On the other hand, a smaller $\lambda$ shows the preference of a better fault tolerance ability with respect to load balancing.

Thus, a final score may be obtained, e.g., by the score compiler 514, using Eq. 3 (814):

$$(1-\lambda)Score + \lambda(Score_{Ft})$$

## Eq. 3

Again, the terms Score and $Score_{Ft}$ should be understood to represent outputs of, e.g., Eq. 2 above as calculated according to the operations of Figures 7 and 8.

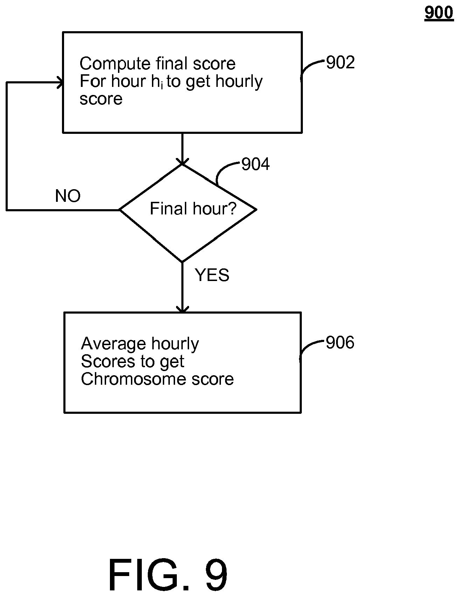

Figure 9 is a fourth flowchart 900 illustrating example operations of the system of Figures 1 and 5. As referenced above, it may be useful to make placement decisions on an hourly basis in order to account for hourly differences in loads and other characteristics of the tenants and/or servers. Thus, in Figure 9, a final score is computed for an hour $h_i$ to get an hourly score (902). If not the final hour, e.g., of a 24 hour period/day (904), then the next hourly score may be computed (902). Otherwise, the hourly scores may be averaged to get a total chromosome score (906).

As such, the final score may be used with respect to the chromosome in question, and similarly, a final score may be computed for each chromosome of a given population/generation. Then, as described, the chromosome comparator 128 may rank the chromosomes accordingly and forward a selected subset thereof onto the chromosome combiner 130, as part of the evolutionary loop of the genetic algorithm as described above.

Figures 1 and 5 thus take into account the fact that it is probable that within one hour of the day, that one or more servers may have a high load. As just described with respect to Figure 9, the systems and methods described herein are able to enforce the load balancing across 24 hours within a day.

If the described algorithms only have the knowledge of tenants' daily load and computes a placement accordingly, the best placement available may yet result in (overly) large maximal load to the servers. If, however, the described algorithms are provided with the tenants' load of every hour within a day, and then evaluates a placement by averaging the scores of such placement across 24 hours, as described, then the maximal load of the server(s) across 24 hours of each server(s) may be minimized.

Figures 6-9 describe operations of a particular evaluation function that may be used with the systems of Figures 1 and 5, and are described at a level to convey the included functions and characteristics thereof. However, it will be appreciated that in actual operation or execution of the systems of Figures 1 and 5, many variations and optimizations may be employed. For example, when calculating the hourly scores in Figure 9, a number of parameters which do not change on an hourly basis (such as whether a particular tenant database is replicated on a single server, as prohibited by the fifth SLA constraint, above) need not be re-calculated. Other efficiencies and optimizations may be included in actual implementations of the systems of Figures 1 and 5, as would be apparent.

In the following, actual portions of code or pseudo-code are presented which provide examples of such actual implementations. In particular, Algorithm 1 is presented below, in which the variable t represents a current generation of chromosomes, and $P(t)$ represents the population at that generation. The chromosomes evolve through multiple generations of adaptation and selection, as described herein. Additionally, as shown in Algorithm 1, the chromosome combiner 130 in some implementations may include one or more mutations into a chromosome population. That is, a particular aspect of one or more chromosomes may be randomly altered or mutated in order to explore portions of the solution space that otherwise would not be reached during normal execution of the genetic algorithm. Thus, Algorithm 1 represents an overall execution of the genetic algorithm and associated operations, similarly to the examples of Figures 4 and 6, above. Note that in the following Algorithms, the first-sixth SLA constraints are referred to as REQ1-REQ6, respectively.

| **Algorithm 1** Genetic Search Algorithm |
| --- |
| 1:    **FUNCTION** Genetic algorithm |
| 2:    **BEGIN** |
| 3:    Time $t$ |
| 4:    Population $P(t)$ := new random Population |
| 5: |
| 6:    **while** ! done **do** |
| 7:      recombine and/or mutate P(t) |
| 8:      evaluate($P(t)$) |
| 9:      select the best $P(t + 1)$ from $P(t)$ |
| 10:      $t := t + 1$ |
| 11:    **end while** |
| 12:    **END** |

As seen in Algorithm 1, the actual evaluation function occurs at line 8 thereof. Algorithm 2 provides further details of how such an evaluation function may be implemented. Specifically, for example, in line 5, it computes the score for each chromosome under a normal operation with no server failure, similarly to the operations of FIG 7. To do so, Algorithm 2 calls Algorithm 3 as described below. Then, from line 7 to line 10, it evaluates the performance of same placement when a server failure occurs, again using Algorithm 3, and similarly to the operations of FIG 8. In each iteration, one of the servers is assumed failed and the original load placed at the failed server is redirected to other server containing replicas of the same tenant databases as the failed server. In line 11, the final score of the chromosome is computed by applying parameter λ to respect the preference of the fault tolerance ability with respect to load balancing.

| **Algorithm 2** GA Evaluation Function |
| --- |
| 1:    **FUNCTION** evaluate |

(continued)

| Algorithm 2 GA Evaluation Function |
| --- |
| 2: **IN:** *CHROMOSOME*, a representation of the placement of replicas of tenants on servers, preferences $\alpha$, $\beta$, $\phi_{diff}$, and $\lambda$ |
| 3: **OUT:** *score*, the *score of CHROMOSOME* |
| 4: **BEGIN** |
| 5: *score*(*normal*) := evaluate_placement(*CHROMOSOME*, $\alpha$, $\beta$, $\phi_{diff}$) |
| 6: {Loop over each server to simulate the server failure} |
| 7: **for** (each server $\in$ *CHROMOSOME*) do |
| 8: *chromosome*:=*CHROMOSOME.remove*(*server*) |
| 9: *score*(*failure$_{server}$*):=evaluate_placement(*chromosome* $\alpha$, $\beta$, $\phi_{diff}$) |
| 10: **end for** |
| 11: $$score := (1 - \lambda) \cdot normalscore + \lambda \cdot \frac{\sum_{i=1}^{S} score(failure_i)}{S}$$ |
| 12: **return** *score* |

The evaluate placement function referenced in Algorithm 2 is shown in Algorithm 3, below. In Algorithm 3, as referenced above, operations of Figures 7 and 8, as well as of Figure 9, are illustrated. Specifically, lines 6-10 check whether there are replicas of the same tenant placed on a same server. If so, such a placement will get a score of infinity or effective infinity, since such a condition violates the required fifth SLA constraint.

Similarly, from line 12 to line 17, every server is examined as to whether its disk space is enough to host the assigned replicas, as required by the sixth SLA constraint. Any server failing to host the assigned tenant database(s) will again result in a score of infinity or effective infinity.

If the above two conditions are satisfied, the placement is evaluated across 24 hours in an hour by hour manner, as shown in Figure 9. Statistics of the servers occupied by premium and regular tenants are updated (line 20-29) and the score of that hour is calculated by incorporating the user preferences at line 30. Finally, the average score across the 24 hours is returned as the final score of the chromosome.

```
Algorithm 3 Evaluate a Placement
 1: FUNCTION evaluate_placement
 2: IN: CHROMOSOME, a representation of the placement of replicas of tenants on servers, preferences α, β,
    and φ_{diff}
 3: OUT: score, the score of the placement indicated by
    CHROMOSOME
 4: BEGIN
 5:   {Loop over each tenant to check REQ5}
 6:   for (each tenant ∈ CHROMOSOME) do
 7:     if (∃tenant's replicas r_1, r_2 on the same server)
        then
 8:        return +∞
 9:     end if
10:   end for
11:   {Loop over each server to check REQ6}
12:   for (each server ∈ CHROMOSOME) do
13:     datavolume := Aggregate the data volumes of the
        tenants placed on server
14:     if (datavolume > StorageCap_{server}) then
15:        return +∞
16:     end if
17:   end for
18:   {Loop over 24 hours to get every hour's score}
19:   for (each hour in 24 hours) do
20:     for (each server) do
21:        load := Aggregate loads of all tenants on server
22:        server^{hour} := \frac{load}{CompPower_{server}}
23:        if (server has premium tenants on it) then
24:           Update σ_{pre}^{hour} and AVG_{pre}^{hour}
25:        end if
26:        if (server has regular tenants on it) then
27:           Update σ_{reg}^{hour} and AVG_{reg}^{hour}
28:        end if
29:     end for
30:     score^{hour} := α · σ_{pre}^{hour} + (1 − α) · σ_{reg}^{hour} + β ·
           φ_{diff}(AVG_{pre}^{hour}, AVG_{reg}^{hour})
31:   end for
32:   {average the scores over 24 hours as the final score}
33:   \overline{score} := AVERAGE_{i=1}^{24}\{score^i\}
34:   return \overline{score}
35: END
```

Figures 1-9 and the above-described equations and algorithms provide general and specific examples of how tenant database may be assigned to a plurality of servers of the server farm 106 in a way that implicitly incorporates the SLA constraints 112 and other inputs 114-118. Thus, potentially essential constraints may be definitely incorporated, while other constraints may be incorporated to varying extents that are modifiable by the user in a desired manner, using the preference tuner 118.

The following description provides additional examples and explanation of how the preference tuner 118 may be used with respect to the various preference parameters that are specifically described with respect to the examples of Figures 5-9. As generally referenced above, the preference parameter $\alpha$ may be used to represent a user preference for balancing a load of servers occupied by premium and regular tenants, so that a greater $\alpha$ indicates that it is more important to balance the load(s) of the premium tenants, while a relatively smaller $\alpha$ indicates that it is more important to balance the load(s) of the regular tenants. The preference parameter $\beta$ is used to enforce the differential load between different classes of tenants, i.e., to determine an extent to which an actual differential load may vary from a specified or desired differential load. Finally, the preference parameter $\lambda$ may be used as described such that a larger (or smaller) value for this parameter indicates that the user cares more (or less) about the normal cases with rare server failures (or cases where server failure is more common). In general, in various embodiments, the parameters $\alpha$, $\beta$, and $\lambda$ may be set to vary between 0 and 1, except that the parameter $\beta$ may be set to infinity or effective infinity as referenced above to effectively remove a given chromosome from consideration.

It may be appreciated with respect to the parameter $\alpha$ that users may specify their preferences of how they desire to balance the load of servers occupied by the premium or regular tenants (i.e., which class of tenants' load(s) they want to balance). A greater $\alpha$ indicates that the load balance for the premium tenants is more important, and vice-versa. The example algorithm(s) above are capable of returning a solution that is very close to the users' preference, so that, if $\alpha$ is large, the algorithm will derive a solution in which the load of the premium tenants is much better balanced than that of the regular tenants. On the other hand, given a smaller $\alpha$, the algorithm can generate a result that has the load of regular tenants more balanced. Even with limitations on available servers or disk space thereof, the parameter $\alpha$ can be used to enforce the desired load balance between premium and regular tenants. Moreover, variations in $\alpha$ generally have little or no impact in the efficacy of the parameter $\beta$.

Regarding the parameter $\beta$ more specifically, it may be appreciated as referenced above that this parameter relates to the preference of the user on enforcing differential load. If the user puts more emphasis on enforcing the differential load between different classes of tenants, i.e. a larger $\beta$, then the algorithm responds effecitvely to meet that requirement. However, when the underlying parameter (s) of X% and $\Phi_{diff}$ (the desired differential load between premium and regular tenants and the extent to which a chromosome matches that desired differential) increase(s), then relatively smaller or larger values of $\beta$ may be more or less difficult to enforce, particularly dependent on any server disk space limitations.

Regarding the parameters X% and $\Phi_{diff}$ themselves, it may be appreciated that the function $\Phi$ as defined above may itself be adjusted to meet different preferences. For example, if the premium tenants receive worse service than the regular tenants (as would be defined by a condition in which the average response time of the regular tenants is less than that of the premium tenants), then the parameter $\Phi_{diff}$ may be set to infinity or effective infinity since such a situation may generally be completely unacceptable. On the other hand, if the premium tenants get too much benefit relative to the regular tenants, it is possible that the service provided to regular tenants will deteriorate dramatically. So, when the difference between regular and premium tenants exceeds X% (which is not necessary with respect to the SLA constraints and at best provides an undue benefit to the premium tenants), then again a value of infinity or effective infinity may be assigned.

As already discussed, the parameter $\lambda$ may be used to specify whether a user cares more about the normal cases (in which server failure rarely happens) or the cases in which server failure happens relatively frequently. To express this, it may be considered that a *server$_i$* crashes, and the resulting load deviations of the servers occupied by premium and regular tenants are then defined as $dev_{pre}(i)$ and $dev_{reg}(i)$, while when no server crashes the deviations may be expressed just as $dev_{pre}$ and $dev_{reg}$.

When a larger $\lambda$ is specified to express a greater concern of the user about load balancing with server failures, then averaged values of $dev_{pre}$ and devreg will become smaller. Meanwhile, $dev_{pre}$ and devreg are not noticeably affected negatively. The reason is that the load is still balanced when any one of the servers crashes implicitly indicates that the load is also balanced over all the servers. On the other hand, if the load is already balanced over all the servers, the load may not always be as well balanced when the server crash occurs.

Thus, the present description provides an advance over the load balancing problem of assigning n jobs to m servers, including consideration of the additional complexity needed to enable SLA constraints. The placement algorithm(s) described herein is flexible enough to incorporate various SLA constraints in various forms, and able to generate a best possible placement solution even when it fails to generate a solution meeting all requirements. The described generic algorithm provides such a solution for solving the placement problem, and has the flexibility to encapsulate SLA constraints in various forms in its evaluation. The systems and method described herein thus provide a complete framework encapsulating SLA constraints in various forms and a generic algorithm to find the best possible solution progressively to meet the constraints in view of available resources, requirements, and contexts.

Implementations of the various techniques described herein may be implemented in digital electronic circuitry, or in computer hardware, firmware, software, or in combinations of them. Implementations may implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

While certain features of the described implementations have been illustrated as described herein, many modifications, substitutions, changes and equivalents will now occur to those skilled in the art. It is, therefore, to be understood that the appended claims are intended to cover all such modifications and changes as fall within the scope of the embodiments.

**Claims**

1. A computer system including instructions recorded on a computer-readable medium, the system comprising:

   a placement manager (102) configured to determine a placement of each of a plurality of tenant databases (104) with one of a plurality of servers (106), wherein the plurality of tenant databases (104) include original tenant databases and replicated tenant databases that are duplicated from the original tenant databases, wherein the placement manager (102) includes

   an input handler (120) configured to determine constraints (112), such as load balancing and fault tolerance, of a service level agreement (SLA) governing an association of the plurality of tenant databases (104) with the plurality of servers (106), and configured to determine computational constraints (114) related to computing resources associated with the plurality of servers (106), such as processing power or storage capacity of each such server (106), the constraints including SLA constraints specifying a premium class of tenants and a regular class of tenants associated with the plurality of tenant databases, the premium class having access to more replicated databases than the regular class, wherein the premium tenants (118) are placed with servers having X% less load than servers provided to regular tenants (110);
   a chromosome generator (124) configured to generate an initial plurality of chromosomes, each chromosome including a potential placement of each of the plurality of tenant databases (104) with one of the plurality of servers (106),
   a chromosome comparator (128) configured to compare each of the plurality of chromosomes based on compliance with the SLA constraints (112) and relative to the computational constraints (114), to thereby output a selected subset of the plurality of chromosomes, which represents best available placements of the tenant databases (104) to the servers (106), wherein the chromosome comparator (128) is configured to evaluate each chromosome including creating a plurality of chromosome variants in which each chromosome variant is associated with a potential failure of a corresponding server of the plurality of servers (106), and/or evaluate each chromosome including normalizing a load of each server of the plurality of servers (106) and calculating a standard deviation of the loads of the servers, and/or evaluate each of the plurality of chromosomes for each of a plurality of time periods and then combine the resulting plurality of evaluations to obtain a total evaluation for a corresponding chromosome,
   a chromosome combiner (130) configured to receive the selected subset of the plurality of chromosomes and to combine chromosomes of the selected subset of the plurality of chromosomes to obtain a next generation of chromosomes for output to the chromosome comparator (128) which performs a subsequent comparison therewith of the next generation of chromosomes with respect to the SLA constraints (112) and the computational constraints (114), as part of an iterative evolutionary loop of successive generations of the plurality of chromosomes between the chromosome comparator (128) and the chromosome combiner (130); and

a placement selector (124) configured to monitor the evolutionary loop and to select a particular one of the chromosomes for use in execution of an actual placement of the tenant databases (104) with the servers (106), wherein the placement selector is tasked with determining whether, when, and how to interrupt or otherwise end the evolutionary loop and extract the best or best-available chromosome, and with executing an actual transmission and installation of the tenant databases on the appropriate server(s).

2. The system according to claim 1, wherein the SLA constraints (112) specify both a load balancing and a fault tolerance for the plurality of tenant databases (104) for a corresponding tenant with respect to the plurality of servers (106), provided by installation of at least two of the plurality of tenant databases (104) of the corresponding tenant on at least two of the plurality of servers (106).

3. The system according to claim 1, wherein the SLA constraints (112) specify that the superior access is specified in terms of placement of tenant databases of the premium tenants (108) on servers of the plurality of servers (106) having a relatively lower load as compared to placement of tenant databases of the regular tenants (110), wherein the SLA constraints (112) specify that the superior access includes a superior fault tolerance that is specified in terms of placement of tenant databases of the premium tenants (108) on more servers of the plurality of servers (106) as compared to placement of tenant databases of the regular tenants (110) on the plurality of servers (106).

4. The system according to any one of the preceding claims, wherein the input handler (120) is configured to
input at least one tenant context (116) associated with tenants associated with the plurality of tenant databases (104), the at least one tenant context (116) specifying a data size and job request characteristic of the associated tenant databases, and wherein the chromosome comparator (128) is configured to evaluate the plurality of comparators relative to the SLA constraints (112) and the computations constraints (114), using the at least one tenant context (116), and/or
input preference parameters received from a preference tuner (118) and expressing a manner in which at least one of the SLA constraints (112) is evaluated by the chromosome comparator (128).

5. The system according to any one of the preceding claims, wherein the placement manager (102) comprises a chromosome generator (126) configured to generate an initial population of chromosomes for evaluation by the chromosome comparator (128), the initial population of chromosomes each being formed as an array of size T having elements numbered from 1 to S, where T is the number of the plurality of tenant databases (104) and S is the number of the plurality of servers (106).

6. The system according to any one of the preceding claims, wherein the chromosome combiner (130) is configured to combine pairs of the plurality of chromosomes including dividing each member of each pair into portions and then combining at least some of the portions from each pair into a new chromosome.

7. The system according to any one of the preceding claims, wherein the placement selector (124) is configured to select the selected chromosome after a pre-determined number of generations of the evolutionary loop, or after determining that the selected chromosome satisfies the SLA constraints (112) to a pre-determined extent.

8. A computer-implemented method, comprising:

determining (402) a placement of each of a plurality of tenant databases (104) with one of a plurality of servers (106), wherein the tenant databases (104) include original tenant databases and replicated tenant databases that are duplicated from the original tenant databases;
determining (404) constraints (112), such as load balancing and fault tolerance, of a service level agreement (SLA) governing an association of the plurality of tenant databases (104) with the plurality of servers (106), the constraints including SLA constraints specifying a premium class of tenants and a regular class of tenants associated with the plurality of tenant databases, the premium class having access to more replicated databases than the regular class, wherein the premium tenants (118) are placed with servers having X% less load than servers provided to regular tenants (110);
determining (406) computational constraints (114) related to computing resources associated with the plurality of servers (106), such as processing power or storage capacity of each server (106);

generating an initial plurality of chromosomes, each chromosome including a potential placement of each of the plurality of tenant databases (104) with one of the plurality of servers (106);

comparing (408) each of a plurality of chromosomes based on compliance with the SLA constraints (112) and relative to the computational constraints (114), evaluating each chromosome including

creating a plurality of chromosome variants in which each chromosome variant is associated with a potential failure of a corresponding server of the plurality of servers (106), and/or

normalizing a load of each server of the plurality of servers (106) and calculating a standard deviation of the loads of the servers, and/or

evaluating each of the plurality of chromosomes for each of a plurality of time periods and then combining the resulting plurality of evaluations to obtain a total evaluation for a corresponding chromosome;

outputting (410) a selected subset of the plurality of chromosomes;

combining (412) chromosomes of the selected subset of the plurality of chromosomes to obtain a next generation of chromosomes for subsequent comparison of the chromosomes of the next generation of chromosomes with respect to the SLA constraints (112) and the computational constraints (114), as part of an evolutionary loop of successive generations of the plurality of chromosomes;

monitoring the evolutionary loop; and

selecting (414) a particular one of the chromosomes for use in execution of an actual placement of the tenant databases (104) with the servers (106), wherein a placement selector is tasked with determining whether, when, and how to interrupt or otherwise end the evolutionary loop and extract the best or best-available chromosome;

executing an actual transmission and installation of the tenant databases on the appropriate server(s).

9. The method according to claim 8 wherein the SLA constraints (112) specify

both a load balancing and a fault tolerance for the plurality of tenant databases (104) for a corresponding tenant with respect to the plurality of servers (106), provided by installation of at least two of the plurality of tenant databases (104) of the corresponding tenant on at least two of the plurality of servers (106), and/or

at least two classes of tenants associated with the plurality of tenant databases (104), the at least two classes including a premium class (108) having superior access to resources of the plurality of servers (106) as compared to a regular class (110).

10. The method according to any one of claims 8 or 9, wherein determining the SLA constraints (112) comprises receiving preference parameters expressing a manner in which at least one of the SLA constraints (112) is evaluated by the chromosome comparator (128).

11. The method according to any one of claims 8 to 10, wherein generating the initial plurality of chromosomes comprises: expressing potential placements of the plurality of tenant databases (104) on the plurality of servers (106) as chromosomes expressed as arrays of size T having elements numbered from 1 to S, where T is the number of the plurality of tenant databases (104) and S is the number of the plurality of servers (106).

12. The method according to any one of claims 8 to 11, wherein the successive generations are determined by determining a selected subset of the current generation based on the evaluating, combining pairs of the selected subset to obtain a next generation, and then re-executing the evaluating for the next generation to obtain a second selected subset thereof.

13. A computer program product, the computer program product being tangibly embodied on a computer-readable medium and comprising instructions that, when executed, are configured to perform a method according to any one of claims 8 to 12.

**Patentansprüche**

1. Computersystem mit auf einem computerlesbaren Medium aufgezeichneten Befehlen, wobei das System Folgendes umfasst:

einen Platzierungsmanager (102), der dafür ausgelegt ist, eine Platzierung jeder von mehreren Mandantendatenbanken (104) bei einem von mehreren Servern (106) zu bestimmen, wobei die mehreren Mandantendatenbanken (104) ursprüngliche Mandantendatenbanken und replizierte Mandantendatenbanken, die anhand der ursprünglichen Mandantendatenbanken dupliziert wurden, einschließen, wobei der Platzierungsmanager (102) Folgendes aufweist:

einen Eingabe-Handler (120), der dafür ausgelegt ist, Randbedingungen (112), in der Art eines Lastausgleichs und einer Fehlertoleranz, einer Dienstgütevereinbarung (SLA), welche eine Assoziation der mehreren Mandantendatenbanken (104) mit den mehreren Servern (106) festlegt, zu bestimmen, und dafür ausgelegt ist, Rechenrandbedingungen (114) in Bezug auf Rechenressourcen in Zusammenhang mit den mehreren Servern (106) in der Art der Verarbeitungsleistung oder Speicherkapazität jedes dieser Server (106) zu bestimmen, wobei die Randbedingungen SLA-Randbedingungen einschließen, welche eine Premiumklasse von Mandanten und eine gewöhnliche Klasse von Mandanten in Zusammenhang mit den mehreren Mandantendatenbanken spezifizieren, wobei die Premiumklasse Zugang zu einer größeren Anzahl replizierter Datenbanken hat als die gewöhnliche Klasse, wobei die Premiummandanten (118) an Servern platziert werden, die X % weniger Last haben als Server, die gewöhnlichen Mandanten (110) bereitgestellt werden,

einen Chromosomengenerator (124), der dafür ausgelegt ist, mehrere anfängliche Chromosomen zu erzeugen, wobei jedes Chromosom eine potenzielle Platzierung jeder der mehreren Mandantendatenbanken (104) bei einem der mehreren Server (106) aufweist,

einen Chromosomenvergleicher (128), der dafür ausgelegt ist, jedes der mehreren Chromosomen auf der Grundlage der Konformität mit den SLA-Randbedingungen (112) und in Bezug auf die Rechenrandbedingungen (114) zu vergleichen, um dadurch eine ausgewählte Untermenge der mehreren Chromosomen auszugeben, welche beste verfügbare Platzierungen der Mandantendatenbanken (104) an den Servern (106) repräsentiert, wobei der Chromosomenvergleicher (128) dafür ausgelegt ist, jedes Chromosom einschließlich der Erzeugung mehrerer Chromosomenvarianten, wobei jede Chromosomenvariante einem möglichen Ausfall eines entsprechenden Servers von den mehreren Servern (106) zugeordnet ist, zu beurteilen und/oder jedes Chromosom einschließlich des Normierens einer Last jedes Servers von den mehreren Servern (106) und des Berechnens einer Standardabweichung der Lasten der Server zu beurteilen und/oder jedes der mehreren Chromosomen für jeden von mehreren Zeiträumen zu beurteilen und dann die sich ergebenden mehreren Beurteilungen zu kombinieren, um eine Gesamtbeurteilung für ein entsprechendes Chromosom zu erhalten,

einen Chromosomenkombinierer (130), der dafür ausgelegt ist, die ausgewählte Untermenge der mehreren Chromosomen zu empfangen und Chromosomen der ausgewählten Untermenge der mehreren Chromosomen zu kombinieren, um eine nächste Generation von Chromosomen zur Ausgabe an den Chromosomenvergleicher (128) zu erhalten, welcher einen nachfolgenden Vergleich der nächsten Generation von Chromosomen damit in Bezug auf die SLA-Randbedingungen (112) und die Rechenrandbedingungen (114) als Teil einer iterativen evolutionären Schleife der nachfolgenden Generationen der mehreren Chromosomen zwischen dem Chromosomenvergleicher (128) und dem Chromosomenkombinierer (130) ausführt, und

einen Platzierungswähler (124), der dafür ausgelegt ist, die evolutionäre Schleife zu überwachen und ein bestimmtes der Chromosomen zur Verwendung bei der Ausführung einer tatsächlichen Platzierung der Mandantendatenbanken (104) bei den Servern (106) auszuwählen, wobei der Platzierungswähler damit beauftragt ist, zu bestimmen, ob, wann und wie die evolutionäre Schleife zu unterbrechen oder auf andere Weise zu beenden ist und das beste oder beste verfügbare Chromosom zu extrahieren ist, und eine tatsächliche Übertragung und Installation der Mandantendatenbanken an dem einen oder den mehreren geeigneten Servern auszuführen.

2. System nach Anspruch 1, wobei die SLA-Randbedingungen (112) sowohl einen Lastausgleich als auch eine Fehlertoleranz für die mehreren Mandantendatenbanken (104) für einen entsprechenden Mandanten in Bezug auf die mehreren Server (106) spezifizieren, die durch Installation von wenigstens zwei der mehreren Mandantendatenbanken (104) des entsprechenden Mandanten auf wenigstens zwei der mehreren Server (106) bereitgestellt sind.

3. System nach Anspruch 1, wobei die SLA-Randbedingungen (112) spezifizieren, dass der höherwertige Zugriff in Bezug auf die Platzierung von Mandantendatenbanken der Premiummandanten (108) auf Servern von den mehreren Servern (106), die eine geringere Last aufweisen, verglichen mit der Platzierung von Mandantendatenbanken der gewöhnlichen Mandanten (110) spezifiziert ist, wobei die SLA-Randbedingungen (112) spezifizieren, dass der höherwertige Zugriff eine höherwertige Fehlertoleranz aufweist, die in Bezug auf die Platzierung von Mandantendatenbanken der Premiummandanten (108) auf einer größeren Anzahl der mehreren Server (106) verglichen mit der Platzierung von Mandantendatenbanken der gewöhnlichen Mandanten (110) auf den mehreren Servern (106) spezifiziert ist.

**4.** System nach einem der vorhergehenden Ansprüche, wobei der Eingabe-Handler (120) dafür ausgelegt ist, Folgendes auszuführen:

Eingeben wenigstens eines Mandantenkontexts (116) in Zusammenhang mit Mandanten, die den mehreren Mandantendatenbanken (104) zugeordnet sind, wobei der wenigstens eine Mandantenkontext (116) eine Datengröße und Auftragsanforderungscharakteristik der zugeordneten Mandantendatenbanken spezifiziert und wobei der Chromosomenvergleicher (128) dafür ausgelegt ist, die mehreren Vergleicher in Bezug auf die SLA-Randbedingungen (112) und die Rechenrandbedingungen (114) unter Verwendung des wenigstens einen Mandantenkontexts (116) zu beurteilen, und/oder

Eingeben von Präferenzparametern, die von einer Präferenzabstimmeinrichtung (118) empfangen wurden und eine Art ausdrücken, in der wenigstens eine der SLA-Randbedingungen (112) durch den Chromosomenvergleicher (128) beurteilt wird.

**5.** System nach einem der vorhergehenden Ansprüche, wobei der Platzierungsmanager (102) einen Chromosomengenerator (126) umfasst, der dafür ausgelegt ist, eine anfängliche Chromosomenpopulation zur Beurteilung durch den Chromosomenvergleicher (128) zu erzeugen, wobei die anfängliche Chromosomenpopulation jeweils als ein Feld mit der Größe T mit von 1 bis S nummerierten Elementen gebildet ist, wobei T die Anzahl der mehreren Mandantendatenbanken (104) ist und S die Anzahl der mehreren Server (106) ist.

**6.** System nach einem der vorhergehenden Ansprüche, wobei der Chromosomenkombinierer (130) dafür ausgelegt ist, Paare der mehreren Chromosomen zu kombinieren, wobei jedes Element von jedem Paar in Abschnitte zerlegt wird und dann wenigstens einige der Abschnitte von jedem Paar zu einem neuen Chromosom kombiniert werden.

**7.** System nach einem der vorhergehenden Ansprüche, wobei der Platzierungswähler (124) dafür ausgelegt ist, das ausgewählte Chromosom nach einer vorgegebenen Anzahl von Erzeugungen der evolutionären Schleife oder nach einer Bestimmung, dass das ausgewählte Chromosom die SLA-Randbedingungen (112) bis zu einem vorgegebenen Grad erfüllt, auszuwählen.

**8.** Computerimplementiertes Verfahren, welches Folgendes umfasst:

Bestimmen (402) einer Platzierung von jeder von mehreren Mandantendatenbanken (104) bei einem von mehreren Servern (106), wobei die Mandantendatenbanken (104) ursprüngliche Mandantendatenbanken und replizierte Mandantendatenbanken, die anhand der ursprünglichen Mandantendatenbanken dupliziert wurden, einschließen,

Bestimmen (404) von Randbedingungen (112), in der Art eines Lastausgleichs und einer Fehlertoleranz, einer Dienstgütevereinbarung (SLA), welche eine Assoziation der mehreren Mandantendatenbanken (104) mit den mehreren Servern (106) festlegt, wobei die Randbedingungen SLA-Randbedingungen einschließen, welche eine Premiumklasse von Mandanten und eine gewöhnliche Klasse von Mandanten in Zusammenhang mit den mehreren Mandantendatenbanken spezifizieren, wobei die Premiumklasse Zugang zu einer größeren Anzahl replizierter Datenbanken hat als die gewöhnliche Klasse, wobei die Premiummandanten (118) an Servern platziert werden, die X % weniger Last haben als Server, die gewöhnlichen Mandanten (110) bereitgestellt werden,

Bestimmen (406) von Rechenrandbedingungen (114) in Bezug auf Rechenressourcen in Zusammenhang mit den mehreren Servern (106) in der Art der Verarbeitungsleistung oder der Speicherkapazität jedes Servers (106),

Erzeugen mehrerer anfänglicher Chromosomen, wobei jedes Chromosom eine potenzielle Platzierung jeder der mehreren Mandantendatenbanken (104) bei einem der mehreren Server (106) aufweist,

Vergleichen (408) jedes von mehreren Chromosomen auf der Grundlage der Konformität mit den SLA-Randbedingungen (112) und in Bezug auf die Rechenrandbedingungen (114), wobei das Beurteilen jedes Chromosoms Folgendes aufweist:

Erzeugen mehrerer Chromosomenvarianten, wobei jede Chromosomenvariante einem möglichen Ausfall eines entsprechenden Servers von den mehreren Servern (106) zugeordnet wird, und/oder

Normieren einer Last jedes Servers von den mehreren Servern (106) und Berechnen einer Standardabweichung der Lasten der Server und/oder

Beurteilen jedes der mehreren Chromosomen während mehrerer Zeiträume und anschließendes Kombinieren der sich ergebenden mehreren Beurteilungen, um eine Gesamtbeurteilung für ein entsprechendes Chromosom zu erhalten,

Ausgeben (410) einer ausgewählten Untermenge der mehreren Chromosomen,

Kombinieren (412) von Chromosomen der ausgewählten Untermenge der mehreren Chromosomen, um eine nächste Generation von Chromosomen für einen nachfolgenden Vergleich der Chromosomen der nächsten Generation von Chromosomen in Bezug auf die SLA-Randbedingungen (112) und die Rechenrandbedingungen (114) als Teil einer evolutionären Schleife nachfolgender Generationen der mehreren Chromosomen zu erhalten,

Überwachen der evolutionären Schleife und

Auswählen (414) eines bestimmten der Chromosomen zur Verwendung bei der Ausführung einer tatsächlichen Platzierung der Mandantendatenbanken (104) bei den Servern (106), wobei ein Platzierungswähler damit beauftragt wird, zu bestimmen, ob, wann und wie die evolutionäre Schleife zu unterbrechen oder auf andere Weise zu beenden ist und das beste oder beste verfügbare Chromosom zu extrahieren ist,

Ausführen einer tatsächlichen Übertragung und Installation der Mandantendatenbanken auf dem einen oder den mehreren geeigneten Servern.

9. Verfahren nach Anspruch 8, wobei die SLA-Randbedingungen (112)

sowohl einen Lastausgleich als auch eine Fehlertoleranz für die mehreren Mandantendatenbanken (104) für einen entsprechenden Mandanten in Bezug auf die mehreren Server (106) spezifizieren, die durch die Installation von wenigstens zwei der mehreren Mandantendatenbanken (104) des entsprechenden Mandanten auf wenigstens zwei der mehreren Server (106) bereitgestellt sind, und/oder

wenigstens zwei Klassen von Mandanten in Zusammenhang mit den mehreren Mandantendatenbanken (104) spezifizieren, wobei die wenigstens zwei Klassen eine Premiumklasse (108) einschließen, die einen höherwertigen Zugriff auf Ressourcen der mehreren Server (106) aufweist als eine gewöhnliche Klasse (110).

10. Verfahren nach einem der Ansprüche 8 oder 9, wobei beim Bestimmen der SLA-Randbedingungen (112) Präferenzparameter empfangen werden, die eine Art ausdrücken, in der wenigstens eine der SLA-Randbedingungen (112) durch den Chromosomenvergleicher (128) beurteilt wird.

11. Verfahren nach einem der Ansprüche 8 bis 10, wobei das Erzeugen der mehreren anfänglichen Chromosomen Folgendes umfasst: Ausdrücken möglicher Platzierungen der mehreren Mandantendatenbanken (104) an den mehreren Servern (106) als Chromosomen, die als Felder mit einer Größe T mit von 1 bis S nummerierten Elementen ausgedrückt sind, wobei T die Anzahl der mehreren Mandantendatenbanken (104) ist und S die Anzahl der mehreren Server (106) ist.

12. Verfahren nach einem der Ansprüche 8 bis 11, wobei die aufeinanderfolgenden Generationen bestimmt werden, indem eine ausgewählte Untermenge der aktuellen Generation auf der Grundlage der Beurteilung bestimmt wird, Paare der ausgewählten Untermenge kombiniert werden, um eine nächste Generation zu erhalten, und dann die Beurteilung für die nächste Generation erneut ausgeführt wird, um eine zweite ausgewählte Untermenge davon zu erhalten.

13. Computerprogrammprodukt, wobei das Computerprogrammprodukt gegenständlich auf einem computerlesbaren Medium verwirklicht ist und Befehle umfasst, die, wenn sie ausgeführt werden, dafür ausgelegt sind, ein Verfahren nach einem der Ansprüche 8 bis 12 auszuführen.

**Revendications**

1. Système informatique comprenant des instructions enregistrées sur un support lisible par ordinateur, le système comportant:

un gestionnaire de positionnement (102) configuré pour déterminer un positionnement de chaque base de données de locataires parmi une pluralité de bases de données de locataires (104) avec un serveur parmi une pluralité de serveurs (106), dans lequel la pluralité de bases de données de locataires (104) comprennent des bases de données de locataires d'origine et des bases de données de locataires dupliquées qui sont dupliquées à partir des bases de données de locataires d'origine, dans lequel le gestionnaire de positionnement (102) comprend:

un gestionnaire d'entrée (120) configuré pour déterminer des contraintes (112), tels qu'un équilibre de charge et une tolérance aux défaillances, d'un accord de niveau de service (SLA) dirigeant une association de la pluralité de bases de données de locataires (104) avec la pluralité de serveurs (106), et configuré pour déterminer des contraintes de calcul (104) associées à des ressources de calcul associées à la pluralité de serveurs (106), tels qu'une puissance de traitement ou une capacité de stockage de chacun des serveurs (106), les contraintes comprenant des contraintes SLA spécifiant une classe Premium de locataires et une classe régulière de locataires associées à la pluralité de bases de données de locataires, la classe Premium ayant accès à plus de bases de données dupliquées que la classe régulière, dans lequel les locataires Premium (118) sont placés avec des serveurs ayant une charge inférieure à X% par rapport à des serveurs associés à des locataires réguliers (110);

un générateur de chromosomes (124) configuré pour générer une pluralité initiale de chromosomes, chaque chromosome comprenant un positionnement potentiel de chaque base de données de locataires parmi la pluralité de bases de données de locataires (104) avec l'un parmi la pluralité de serveurs (106),

un comparateur de chromosomes (128) configuré pour comparer chaque chromosome parmi la pluralité de chromosomes sur la base de la conformité avec les contraintes SLA (112) et par rapport aux contraintes de calcul (114), pour ainsi délivrer en sortie un sous-groupe choisi de la pluralité de chromosomes, lequel représente les meilleurs positionnements disponibles des bases de données de locataires (104) par rapport aux serveurs (106), dans lequel le comparateur de chromosomes (128) est configuré pour évaluer chaque chromosome en incluant de créer une pluralité de variantes de chromosomes dans lesquelles chaque variante de chromosomes est associée à une défaillance potentielle d'un serveur correspondant parmi la pluralité de serveurs (106), et/ou pour évaluer chaque chromosome en incluant de normaliser une charge de chaque serveur parmi la pluralité de serveurs (106) et en calculant un écart type des charges des serveurs, et/ou pour évaluer chaque chromosome parmi la pluralité de chromosomes pour chaque période parmi une pluralité de périodes de temps et combiner ensuite la pluralité d'évaluations obtenues en résultat afin d'obtenir une évaluation totale pour un chromosome correspondant,

un combineur de chromosomes (130) configuré pour recevoir le sous-groupe choisi parmi la pluralité de chromosomes et pour combiner des chromosomes du sous-groupe choisi parmi la pluralité de chromosomes afin d'obtenir une génération suivante de chromosomes en vue de les délivrer en sortie au comparateur de chromosomes (128) qui exécute une comparaison ultérieure avec ceux-ci de la génération suivante de chromosomes par rapport aux contraintes SLA (112) et aux contraintes de calcul (114), en tant que partie d'une boucle évolutive itérative de générations successives de la pluralité de chromosomes entre le comparateur de chromosomes (128) et le combineur de chromosomes (130); et

un dispositif de sélection de positionnement (124) configuré pour surveiller la boucle évolutive et pour choisir un chromosome particulier parmi les chromosomes en vue d'être utilisé lors de l'exécution d'un positionnement réel des bases de données de locataires (104) avec les serveurs (106), dans lequel le dispositif de sélection de positionnement est chargé de déterminer si, quand, et comment interrompre ou bien terminer la boucle évolutive et extraire le meilleur chromosome ou le meilleur chromosome disponible, et est chargé d'exécuter une transmission réelle et une installation des bases de données de locataires sur le ou les serveur(s) approprié(s).

2. Système selon la revendication 1, dans lequel les contraintes SLA (112) spécifient à la fois un équilibre de charge et une tolérance aux défaillances pour la pluralité de bases de données de locataires (104) pour un locataire correspondant par rapport à la pluralité de serveurs (106), prévu par l'installation d'au moins deux bases de données parmi la pluralité de bases de données de locataires (104) du locataire correspondant sur au moins deux serveurs parmi la pluralité de serveurs (106).

3. Système selon la revendication 1, dans lequel les contraintes SLA (112) spécifient que l'accès supérieur est spécifié en termes de positionnement de bases de données de locataires des locataires Premium (108) sur des serveurs parmi la pluralité de serveurs (106) ayant une charge relativement inférieure comparativement au positionnement de bases de données de locataires des locataires réguliers (110), dans lequel les contraintes SLA (112) spécifient que l'accès supérieur comprend une tolérance aux défaillances supérieure qui est spécifiée en termes de positionnement de bases de données de locataires des locataires Premium (108) sur plus de serveurs parmi la pluralité de serveurs (106) comparativement au positionnement de bases de données de locataires des locataires réguliers (110) sur la pluralité de serveurs (106).

4. Système selon l'une quelconque des revendications précédentes, dans lequel le gestionnaire d'entrée (120) est configuré pour:

délivrer en entrée au moins un contexte de locataires (116) associé à des locataires associés à la pluralité de bases de données de locataires (104), le au moins un contexte de locataires (116) spécifiant une taille de données et une caractéristique de demande de tâche des bases de données de locataires associées, et dans lequel le comparateur de chromosomes (128) est configuré pour évaluer la pluralité de comparateurs par rapport aux contraintes SLA (112) et aux contraintes de calcul (114), en utilisant le au moins un contexte de locataires (116), et/ou

des paramètres de préférences d'entrée reçus en provenance d'un syntoniseur de préférences (118) et exprimant une manière selon laquelle au moins l'une des contraintes SLA (112) est évaluée par le comparateur de chromosomes (128).

5. Système selon l'une quelconque des revendications précédentes, dans lequel le gestionnaire de positionnement (102) comporte un générateur de chromosomes (126) configuré pour générer une population initiale de chromosomes en vue de l'évaluation par le comparateur de chromosomes (128), chaque chromosome de la population initiale de chromosomes étant formé sous forme d'un réseau de taille T ayant des éléments numérotés de 1 à S, où T est le nombre de la pluralité de bases de données de locataires (104) et S est le nombre de la pluralité de serveurs (106).

6. Système selon l'une quelconque des revendications précédentes, dans lequel le combineur de chromosomes (130) est configuré pour combiner des paires de la pluralité de chromosomes comprenant de diviser chaque élément de chaque paire en parties et en combinant ensuite au moins certaines des parties de chaque paire dans un nouveau chromosome.

7. Système selon l'une quelconque des revendications précédentes, dans lequel le dispositif de sélection de positionnement (124) est configuré pour choisir le chromosome choisi après un nombre prédéterminé de générations de la boucle évolutive, ou après avoir déterminé que le chromosome choisi satisfait aux contraintes SLA (112) jusqu'à une limite prédéterminée.

8. Procédé mis en oeuvre par ordinateur, comportant les étapes consistant à:

déterminer (402) un positionnement de chaque base de données de locataires parmi une pluralité de bases de données de locataires (104) avec l'un parmi une pluralité de serveurs (106), dans lequel les bases de données de locataires (104) comprennent des bases de données de locataires d'origine et des bases de données de locataires dupliquées qui sont dupliquées à partir des bases de données de locataires d'origine;
déterminer (404) des contraintes (112), tel qu'un équilibre de charge et une tolérance aux défaillances, d'un accord de niveau de service (SLA) dirigeant une association de la pluralité de bases de données de locataires (104) avec la pluralité de serveurs (106), les contraintes comprenant des contraintes SLA spécifiant une classe Premium de locataires et une classe régulière de locataires associées à la pluralité de bases de données de locataires, la classe Premium ayant un accès à plus de bases de données dupliquées que la classe régulière, dans lequel les locataires Premium (118) sont placés avec des serveurs ayant une charge inférieure à X% par rapport à des serveurs prévus dans des locataires réguliers (110);
déterminer (406) des contraintes de calcul (114) reliées à des ressources de calcul associées à la pluralité de serveurs (106), telles qu'une puissance de traitement ou une capacité de stockage de chaque serveur (106);
générer une pluralité initiale de chromosomes, chaque chromosome comprenant un placement potentiel de chaque base de données de locataires parmi la pluralité de bases de données de locataires (104) avec l'un de la pluralité de serveurs (106);
comparer (408) chaque chromosome de la pluralité de chromosomes sur la base d'une conformité avec les contraintes SLA (112) et par rapport aux contraintes de calcul (114), l'évaluation de chaque chromosome comprenant:

de créer une pluralité de variantes de chromosomes dans lesquelles chaque variante de chromosome est associée à une défaillance potentielle d'un serveur correspondant parmi la pluralité de serveurs (106), et/ou de normaliser une charge de chaque serveur de la pluralité de serveurs (106) et de calculer un écart type des charges des serveurs, et/ou
d'évaluer chaque chromosome de la pluralité de chromosomes pour chaque période de temps parmi une pluralité de périodes de temps et combiner ensuite la pluralité d'évaluations obtenues en résultat pour obtenir une évaluation totale pour un chromosome correspondant;
délivrer en sortie (410) un sous-groupe choisi de la pluralité de chromosomes;
combiner (412) des chromosomes du sous-groupe choisi parmi la pluralité de chromosomes afin d'obtenir une génération suivant de chromosomes en vue d'une comparaison intérieure de chromosomes de la génération suivante de chromosomes par rapport aux contraintes SLA (112) et aux contraintes de calcul (114), en tant que partie d'une boucle évolutive de générations successives de la pluralité de chromosomes;

surveiller la boucle évolutive; et

choisir (414) un chromosome particulier parmi les chromosomes en vue d'une utilisation pour l'exécution d'un positionnement réel des bases de données de locataires (104) avec les serveurs (106), dans lequel un dispositif de sélection de positionnement est chargé de déterminer si, quand, et comment interrompre ou bien terminer la boucle évolutive et extraire le meilleur chromosome ou le meilleur chromosome disponible;

exécuter une transmission réelle et une installation des bases de données de locataires sur le ou les serveur(s) approprié(s).

9. Procédé selon la revendication 8 dans lequel les contraintes SLA (112) spécifient:

à la fois un équilibre de charge et une tolérance aux défaillances pour la pluralité de bases de données de locataires (104) pour un locataire correspondant par rapport à la pluralité de serveurs (106), prévus par l'installation d'au moins deux bases de données parmi la pluralité de bases de données de locataires (104) du locataire correspondant sur au moins deux serveurs parmi la pluralité de serveurs (106), et/ou

au moins deux classes de locataires associées à la pluralité de bases de données de locataires (104), les au moins deux classes comprenant une classe Premium (108) ayant un accès supérieur à des ressources de la pluralité de serveurs (106) comparativement à une classe régulière (110).

10. Procédé selon l'une quelconque des revendications 8 ou 9, dans lequel la détermination des contraintes SLA (112) comporte de recevoir des paramètres de préférences exprimant une manière selon laquelle au moins l'une des contraintes SLA (112) est évaluée par le comparateur de chromosomes (128).

11. Procédé selon l'une quelconque des revendications 8 à 10, dans lequel la génération de la pluralité initiale de chromosomes comporte: d'exprimer des positionnements potentiels de la pluralité de bases de données de locataires (104) sur la pluralité de serveurs (106) en tant que chromosomes exprimés sous forme de réseaux de taille T ayant des éléments numérotés de 1 à S, où T est le nombre de la pluralité de bases de données de locataires (104) et S est le nombre de la pluralité de serveurs (106).

12. Procédé selon l'une quelconque des revendications 8 à 11, dans lequel les générations successives sont déterminées en déterminant un sous-groupe choisi de la génération courante sur la base de l'évaluation, de la combinaison de paires du sous-groupe choisi afin d'obtenir une génération suivante, et exécuter à nouveau par la suite l'évaluation pour la génération suivante afin d'obtenir un second sous-groupe choisi de celle-ci.

13. Produit de programme informatique, le produit de programme informatique étant mis en oeuvre de manière tangible sur un support lisible par ordinateur et comportant des instructions lesquelles, lorsqu'elles sont exécutées, sont configurées pour mettre en oeuvre un procédé selon l'une quelconque des revendications 8 à 12.

**FIG. 1**

Random
cut #1

Random
cut #2

208 210 212 214 216 218 220

| T1 | T2 | T3 | T4 | T5 | T6 | T7 |
| S2 | S5 | S3 | S1 | S4 | S3 | S1 |

224 230 226 222 228 226 222

**202
Parent 1**

208 210 212 214 216 218 220

| T1 | T2 | T3 | T4 | T5 | T6 | T7 |
| S3 | S5 | S3 | S1 | S3 | S5 | S2 |

226 230 226 222 226 230 224

**206
Child**

208 210 212 214 216 218 220

| T1 | T2 | T3 | T4 | T5 | T6 | T7 |
| S3 | S4 | S1 | S2 | S3 | S5 | S2 |

226 228 222 224 226 230 224

**204
Parent 2**

# FIG. 2

**302 Premium**  **304 Regular**

| T1 (306) | T2 (308) | T3 (310) | T4 (312) | T5 (314) | T6 (316) |

**362**

| 318 | 320 | 322 | 324 | 326 | 328 | 330 | 332 | 334 | 336 | 338 | 340 | 342 | 344 |
|---|---|---|---|---|---|---|---|---|---|---|---|---|---|
| T1a | T1b | T1c | T2a | T2b | T2c | T3a | T3b | T4a | T4b | T5a | T5b | T6a | T6b |
| S1 | S2 | S3 | S1 | S2 | S3 | S2 | S4 | S3 | S4 | S4 | S2 | S4 | S1 |
| 346 | 348 | 350 | 346 | 348 | 350 | 348 | 352 | 350 | 352 | 352 | 348 | 352 | 346 |

**364 S1 fails**

| 354 | 348 | 350 | 354 | 348 | 350 | 348 | 352 | 350 | 352 | 352 | 348 | 352 | 354 |
|---|---|---|---|---|---|---|---|---|---|---|---|---|---|
| X | S2 | S3 | X | S2 | S3 | S2 | S4 | S3 | S4 | S4 | S2 | S4 | X |

**366 S2 fails**

| 346 | 356 | 350 | 346 | 356 | 350 | 356 | 352 | 350 | 352 | 352 | 356 | 352 | 346 |
|---|---|---|---|---|---|---|---|---|---|---|---|---|---|
| S1 | X | S3 | S1 | X | S3 | X | S4 | S3 | S4 | S4 | X | S4 | S1 |

**368 S3 fails**

| 346 | 348 | 358 | 346 | 348 | 358 | 348 | 352 | 358 | 352 | 352 | 348 | 352 | 346 |
|---|---|---|---|---|---|---|---|---|---|---|---|---|---|
| S1 | S2 | X | S1 | S2 | X | S2 | S4 | X | S4 | S4 | S2 | S4 | S1 |

**370 S4 fails**

| 346 | 348 | 350 | 346 | 348 | 350 | 348 | 352 | 350 | 360 | 360 | 348 | 360 | 346 |
|---|---|---|---|---|---|---|---|---|---|---|---|---|---|
| S1 | S2 | S3 | S1 | S2 | S3 | S2 | S4 | S3 | X | X | S2 | X | S1 |

# FIG. 3

**400**

Determine each of a plurality of tenant databases and at least one of a plurality of servers, wherein the tenant databases include original tenant databases and replicated tenant databases that are duplicated from the original tenant databases — 402

Determine constraints of a service level agreement (SLA) governing an access of the plurality of tenant databases to the plurality of servers — 404

Determine computational constraints associated with the plurality of servers — 406

Evaluate a plurality of chromosomes based on compliance with the SLA constraints and relative to the computational constraints, each chromosome including a potential placement of each of the plurality of tenant databases with one of the plurality of servers — 408

Output a selected subset of the plurality of chromosomes — 410

Combine chromosomes of the selected subset of the plurality of chromosomes to obtain a next generation of chromosomes for subsequent evaluating of the chromosomes of the next generation of chromosomes with respect to the SLA constraints and the computational constraints, as part of an evolutionary loop of the plurality of chromosomes — 412

Select a selected chromosome therefrom for implementation of the placement therewith — 414

# FIG. 4

128 Chromosome Comparator

502
Load Balance
Manager

504
Load Distribution
Manager

506
Premium Load
Distribution
Manager

508
Fault Tolerance
Manager

510
Duplication
Manager

512
Capacity
Manager

514 Score Compiler

# FIG. 5

<u>600</u>

Determine SLA constraints,
computational constraints, tenant
context(s), and preferences —602

↓

Generate chromosome
population —604

↓

Get chromosome score
for every chromosome using the
evaluation function —606

Get best
chromosome to
use as placement —612

↓

Get selected subset of
chromosomes —608

↓

Combine pairs of
chromosome to get next
generation of chromosome
population —610

# FIG. 6

FIG. 7

800

```
┌──────────────────────────┐
│   Remove Server Sᵢ        │── 802
└──────────────────────────┘
            │
┌──────────────────────────┐
│ Recompute σ̄pre,σ̄reg,φdiff │── 804
└──────────────────────────┘
            │
       ◇ 806
   Is Sᵢ last
    Server ?
```

$$(1-\lambda)\text{Score} + \lambda(\text{Score}_{Ft})$$

Remove Server $S_i$ — 802

Recompute $\bar{\sigma}_{pre}, \bar{\sigma}_{reg}, \phi_{diff}$ — 804

Is $S_i$ last Server ? — 806

NO / YES

Determine load balance score — 808

Determine Load Balance Score with fault tolerance For each server failure — 810

Sum the load balance scores with fault tolerance and divide by total numbers of servers to get $\text{Score}_{Ft}$ — 812

Get final score as $(1-\lambda)\text{Score} + \lambda(\text{Score}_{Ft})$ — 814

# FIG. 8

**900**

Compute final score
For hour $h_i$ to get hourly
score ⟶ 902

Final hour? ⟶ 904

NO

YES

Average hourly
Scores to get
Chromosome score ⟶ 906

# FIG. 9